# EUROPÄISCHE PATENTSCHRIFT

(11) **EP 2 359 502 B1**
(45) Veröffentlichungstag und Bekanntmachung des Hinweises auf die Patenterteilung: **05.04.2017**
(21) Anmeldenummer: 09752761.8
(22) Anmeldetag: 09.10.2009
(51) Int. Cl.: H04B 10/2575, H04N 21/426, G09G 5/00

(54) **SCHALTUNGSANORDNUNG UND VERFAHREN ZUM ÜBERTRAGEN VON TMDS-KODIERTEN SIGNALEN**
CIRCUIT ARRANGEMENT AND METHOD FOR TRANSMITTING TMDS ENCODED SIGNALS
CIRCUIT ET PROCÉDÉ DE TRANSMISSION DE SIGNAUX CODÉS TMDS

(30) Priorität: 09.10.2008 DE 102008042724; 22.09.2009 DE 102009029683
(43) Veröffentlichungstag der Anmeldung: 24.08.2011
(73) Patentinhaber: Silicon Line GmbH, 80687 München (DE)
(72) Erfinder: GROEPL, Martin, 87527 Sonthofen / Oberallgaeu (DE); HOELTKE, Holger, 80995 Muenchen (DE)
(74) Vertreter: Hofmann, Andreas
(86) Internationale Anmeldenummer: PCT/EP2009/063131
(87) Internationale Veröffentlichungsnummer: WO 2010/040816

(56) Entgegenhaltungen:
- EP-A1- 1 956 493
- WO-A2-2007/027948
- US-A1- 2006 147 214
- US-A1- 2006 216 034

## Beschreibung

### Technisches Gebiet

Die vorliegende Erfindung betrifft eine Schaltungsanordnung zum Übertragen von, insbesondere mindestens einer DVI-Datenverbindung und/oder mindestens einer HDMI-Datenverbindung zugeordneten, zumindest partiell, insbesondere zumindest zeitabschnittsweise, TMDS-kodierten Signalen von mindestens einer Datenquelle zu mindestens einer Datensenke (DVI = Digital Visual Interface; HDMI = High Definition Multimedia Interface; TMDS = Transition-Minimized Differential Signaling).

Die vorliegende Erfindung betrifft des Weiteren ein Verfahren zum Übertragen von, insbesondere mindestens einer DVI-Datenverbindung und/oder mindestens einer HDMI-Datenverbindung zugeordneten, zumindest partiell, insbesondere zumindest zeitabschnittsweise, TMDS-kodierten Signalen von mindestens einer Datenquelle zu mindestens einer Datensenke *(vgl. Druckschrift* EP 1 956 493 A1 *aus dem Stand der Technik).*

### Stand der Technik

Hochauflösende Anzeigeeinheiten, (Flach-)Bildschirme, Displays, Fernsehgeräte und Monitore weisen eine elektrische Verbindungsschnittstelle, insbesondere in Form einer DVI-Datenübertragungsschnittstelle und/oder HDMI-Datenübertragungsschnittstelle, auf. Neben verschiedenen Kontrollsignalen werden über diese Schnittstelle auch mehrere differentielle TMDS-kodierte Signale zur Übertragung von Audio- und Videodaten sowie das erforderliche Taktsignal zwischen mindestens einer Datenquelle und mindestens einer Datensenke geführt.

Hierbei handelt es sich bei TMDS (= Transition-Minimized Differential Signaling) grundsätzlich um einen für unkomprimierte Multimediadaten vorgesehenen digitalen Übertragungsstandard, der entwickelt wurde, um elektromagnetische Störungen, wie sie bei der analogen Übertragung auftreten, zu eliminieren; so wird TMDS etwa bei DVI-Übertragungen (DVI = Digital Visual Interface) und/oder bei HDMI-Übertragungen (HDMI = High Definition Multimedia Interface) dazu benutzt, sehr hochauflösende Bildschirme anzusteuern, wobei TMDS-kodierte Signale Datenraten im Bereich von mehreren Gigabit pro Sekunde aufweisen können.

Gemäß Seite 38 der Version 1.3a der vom 10. November 2006 datierenden HDMI-Spezifikation (beteiligte Unternehmen: Hitachi Ltd., Matsushita Electric Industrial Co. Ltd., Philips Consumer Electronics International B.V., Silicon Image Inc., Sony Corporation, Thomson Inc., Toshiba Corporation) bedient sich die TMDS-Technologie eines Stromtreibers, um ein differentielles Niedrigspannungssignal auf der Senkenseite einer gleichstromgekoppelten Übertragungsleitung zu entwickeln.

Die Verbindungsreferenzspannung oder Versorgungsspannung definiert den oberen Spannungswert für jeden der beiden Anschlüsse des differentiellen Signals, während der untere Spannungswert durch die Stromquelle der HDMI-Quelle und durch den Abschlusswiderstand an der Senke bestimmt ist. Der Abschlusswiderstand und die charakteristische Impedanz des Kabels sind aufeinander abzustimmen.

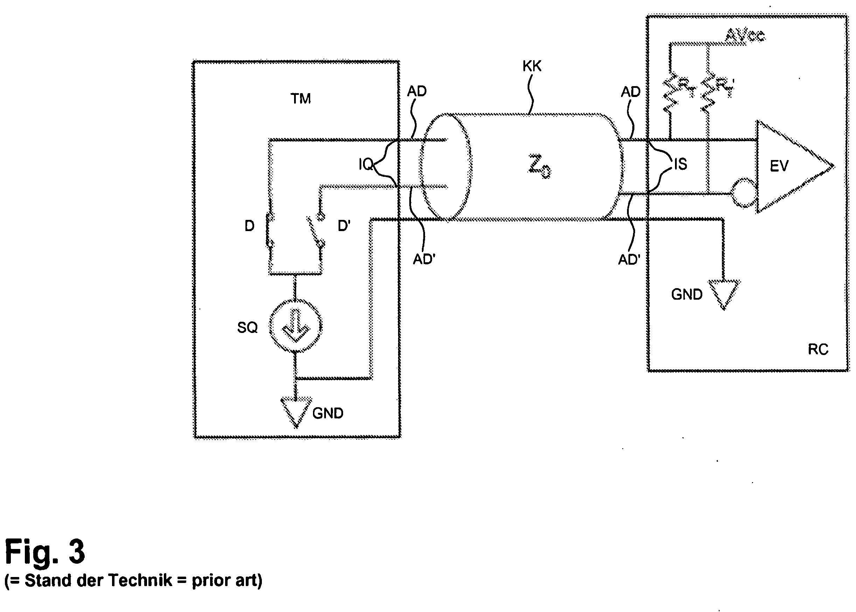

Im Detail wird die elektrische Verbindung zwischen der Verbindungsschnittstelle der Datenquelle und der Verbindungsschnittstelle der Datensenke zum Beispiel mittels eines Kupferkabels KK (mit Impedanz Z₀ pro differentiellem Kupferaderpaar; vgl. Fig. 3) bewerkstelligt. Die TMDS-kodierten Signale werden als Ausgangsstromsignal von der Datenquelle mittels eines Ausgangsstromtreibers (Transmitter TM mit Stromquelle SQ und Doppelschalter D, D'; vgl. Fig. 3) zur Verfügung gestellt.

Über den gleichspannungsgekoppelten Übertragungskanal KK zwischen der Datenquelle und der Datensenke erfolgt die korrekte Leitungsterminierung im Empfänger (Receiver RC; vgl. Fig. 3). An dieser Leitungsterminierung in Form zweier parallel geschalteter Ohmscher Widerstände R_{T}, R_{T}' (vgl. Fig. 3) im Empfänger TM wird auf der Grundlage der Versorgungsspannung AV_{cc} die für den Eingangsverstärker EV erforderliche Eingangssignalspannung generiert.

Fig. 3 zeigt das vorstehend in Bezug auf den Stand der Technik Beschriebene in Form eines konzeptionellschematischen Schaltbilds für ein differentielles TMDS-Signal, wobei aus Fig. 3 des Weiteren ersichtlich ist, dass der Empfänger RC die Gleichspannungsversorgung des Ausgangsstromtreibers des Transmitters TM übernimmt. Des Weiteren stellt die Verbindungsschnittstelle der Datenquelle eine Spannungsversorgung in der Größenordnung von etwa fünf Volt für die Datensenke zur Verfügung, die mit maximal etwa 55 Milliampere belastet werden darf.

Im Hinblick auf den geschilderten Stand der Technik zu bedenken ist allerdings, dass TMDS-kodierte Signale einer HDMI-Datenverbindung pro differentiellem Aderpaar AD, AD' (vgl. Fig. 3) des Kupferkabels KK Datenübertragungsraten von mehreren Gigabit pro Sekunde unterstützen können sollen. Dies bedingt, dass sehr hochwertige und damit teure Kupferkabel benutzt werden müssen, wenn längere Distanzen zwischen Datenquelle und Datensenke zu überwinden sind.

*Zum technologischen Hintergrund der vorliegenden Erfindung wird des Weiteren auf die Druckschriften* WO 2007/027948 A2*,* US 2006/0147214 A1 *und* US 2006/0216034 A1 *aus dem Stand der Technik aufmerksam gemacht.*

### Darstellung der vorliegenden Erfindung: Aufgabe, Lösung, Vorteile

Ausgehend von den vorstehend dargelegten Nachteilen und Unzulänglichkeiten sowie unter Würdigung des umrissenen Stands der Technik liegt der vorliegenden Erfindung die Aufgabe zugrunde, eine Schaltungsanordnung sowie ein Verfahren zum kostengünstigen Übertragen von, insbesondere mindestens einer DVI-Datenverbindung und/oder mindestens einer HDMI-Datenverbindung zugeordneten, zumindest partiell, insbesondere zumindest zeitabschnittsweise, TMDS-kodierten Signalen von mindestens einer Datenquelle zu mindestens einer Datensenke bereit zu stellen.

Diese Aufgabe wird durch eine Schaltungsanordnung mit den im Anspruch 1 angegebenen Merkmalen sowie durch ein Verfahren mit den im Anspruch 12 angegebenen Merkmalen gelöst. Vorteilhafte Ausgestaltungen und zweckmäßige Weiterbildungen der vorliegenden Erfindung sind in den jeweiligen Unteransprüchen gekennzeichnet.

Unter Einsatz der Schaltungsanordnung sowie der Schaltungstechnik gemäß der vorliegenden Erfindung ist mindestens eine kabelbasierte Verbindung realisierbar, die keiner weiteren elektrischen Versorgung - außer der an den elektrischen Kontakten ohnehin bereits vorhandenen elektrischen Versorgung - bedarf.

Im Spezielleren können mittels der Schaltungsanordnung gemäß der vorliegenden Erfindung sowie mittels des Verfahrens gemäß der vorliegenden Erfindung Signale, die zumindest partiell, insbesondere zumindest zeitabschnittsweise TMDS-kodiert sind, im Wege der optischen Signalübertragung von mindestens einer Datenquelle zu mindestens einer Datensenke transportiert werden, insbesondere auf Basis mindestens einer DVI-Datenverbindung und/oder mindestens einer HDMI-Datenverbindung.

Hierbei stellt die (eine Umwandlung des elektrischen Signals in ein optisches Signal mittels mindestens eines elektro-optischen Wandlers und zurück mittels mindestens eines opto-elektrischen Wandlers bedingende) optische Signalübertragung über Glasfaser oder über Kunststofffaser, wie etwa über Plastikfaser, eine preiseffiziente Alternative zu hochwertigen, teuren Kupferkabeln dar.

Der Fachmann auf dem vorliegenden technischen Gebiet, zum Beispiel ein Fachingenieur der Nachrichtentechnik mit vertieften Kenntnissen im Multimediabereich, wird in Bezug auf die vorliegende Erfindung insbesondere die Entbehrlichkeit einer zusätzlichen externen Stromversorgung zu schätzen wissen; dies bedeutet, dass die Versorgung der mindestens einen Treiberschaltung bzw. der mindestens einen Transimpedanzwandlerschaltung erfindungsgemäß allein mittels der an den Verbindungsschnittstellen, insbesondere an den DVI-Übertragungsschnittstellen oder an den HDMI-Übertragungsschnittstellen, der Datenquelle und der Datensenke zur Verfügung gestellten Spannungen und Ströme erfolgt.

Die vorliegende Erfindung macht sich also die Tatsache zunutze, dass die Stromversorgung der mindestens einen Treiberschaltung bzw. der mindestens einen Transimpedanzwandlerschaltung nicht von einer (oder gar mehreren) zusätzlichen externen Stromversorgungsquelle(n) herrührt, sondern vielmehr von den Verbindungsschnittstellen der Datenquelle bzw. der Datensenke zur Verfügung gestellt werden kann.

Dies ist im Sinne der vorliegenden Erfindung besonders vorteilhaft, denn externe Stromversorgungsquellen erweisen sich im Consumerelektronikbereich als technisch umständlich und bedeuten einen erheblichen Verkaufsnachteil. Andere Schaltungsanordnungen als die im Rahmen der vorliegenden Erfindung vorgestellte Schaltungsanordnung sind typischerweise aufgrund begrenzter zur Verfügung stehender elektrischer Leistung nicht betriebsfähig.

Die Schaltungsanordnung mit der mindestens einen Treiberschaltung gemäß der vorliegenden Erfindung sowie mit der mindestens einen Transimpedanzwandlerschaltung gemäß der vorliegenden Erfindung stellt nun eine Möglichkeit dar, die von der Verbindungsschnittstelle der Datenquelle zur Verfügung gestellten TMDS-Signale auch optisch zu übertragen, ohne dass hierfür eine zusätzliche externe Stromversorgung benötigt würde.

Angesichts der Tatsache, dass TMDS-kodierte Signale Datenraten im Bereich von mehreren Gigabit pro Sekunde aufweisen können, erlaubt die mittels der vorliegenden Erfindung ermöglichte optische Übertragung derartiger TMDS-kodierter Signale über optische Fasern den Aufbau preiswerter Signalverbindungen, die keine elektro-magnetische Störstrahlung abstrahlen und die hohe Datenraten dämpfungsarm von der Datenquelle zur Datensenke transportieren können. Die durch die vorliegend optische Übertragung bedingten Vorteile kommen insbesondere bei Kabellängen von mehr als etwa drei Metern zum Tragen.

Bedingt dadurch, dass zwischen den TMDS-Transmitter und das lichtemittierende Element die Treiberschaltung gemäß der vorliegenden Erfindung geschaltet ist, wird in besonders zweckmäßiger Weise sichergestellt, dass der aus dem TMDS-Transmitter zur Verfügung gestellte Gleichstromanteil zur Energieversorgung des lichtemittierenden Elements eingesetzt wird; der aus dem TMDS-Transmitter zur Verfügung gestellte Wechselstromanteil hingegen wird zur Modulation des durch das lichtemittierende Element geführten Stromflusses herangezogen.

Auf diese Weise wird im Ergebnis der aus dem TMDS-Transmitter zur Verfügung gestellte Gleichstromanteil mittels der nach Art eines Gleichstrom-Gleichstrom-Wandlers (DC-DC-Konverter) fungierenden Treiberschaltung in einen modulierten Signalstrom zur Ansteuerung des lichtemittierenden Elements umgeformt, was einen Transfer der durch den TMDS-Transmitter zur Verfügung gestellten Energie (Leistung) zum lichtemittierenden Element bedeutet.

Die betragsmäßige Größenordnung dieser transferierten Leistung ergibt sich als Produkt aus fließendem Gleichstromanteil und der Spannungsdifferenz zwischen der Knotenspannung am Ausgang des TMDS-Transmitters und der ebenfalls an der TMDS-Schnittstelle in der Größenordnung von etwa fünf Volt zur Verfügung stehenden Spannungsversorgung.

Die Transimpedanzwandlerschaltung wird erfindungsgemäß über einen am differentiellen Aderpaar anliegenden Gleichspannungsanteil versorgt.

Die vorliegende Erfindung betrifft des Weiteren eine Kabelverbindung zum Übertragen von, insbesondere mindestens einer DVI-Datenverbindung und/oder mindestens einer HDMI-Datenverbindung zugeordneten, zumindest partiell, insbesondere zumindest zeitabschnittsweise, TMDS-kodierten Signalen von mindestens einer Datenquelle zu mindestens einer Datensenke, aufweisend mindestens eine Schaltungsanordnung gemäß der vorstehend dargelegten Art.

Die erfindungsgemäße Bereitstellung mindestens eines derartigen aktiven optischen Übertragungskabels basiert darauf, dass die Schaltungsanordnung, das heißt die mindestens eine Treiberschaltung und/oder die mindestens eine Transimpedanzwandlerschaltung sehr kompakt, nämlich ohne externe Stromversorgung realisiert werden können, so dass der Treiber und/oder der Transimpedanzwandler in einen handelsüblichen, insbesondere konventionellen oder regulären, DVI-Stecker und/oder HDMI-Stecker eingebaut werden können/kann.

Die vorliegende Erfindung betrifft schließlich die Verwendung mindestens einer Schaltungsanordnung gemäß der vorstehend dargelegten Art und/oder eines Verfahrens gemäß der vorstehend dargelegten Art bei der Signalverbindung, insbesondere in mindestens einer Kabelverbindung, zum Beispiel in mindestens einem aktiven optischen Übertragungskabel, zwischen mindestens einer HDTV-Datenquelle, zum Beispiel mindestens einem Blu-Ray-Player, und mindestens einer HDTV-Datensenke, zum Beispiel mindestens einem sehr hochauflösenden Flachbildschirm.

### Kurze Beschreibung der Zeichnungen

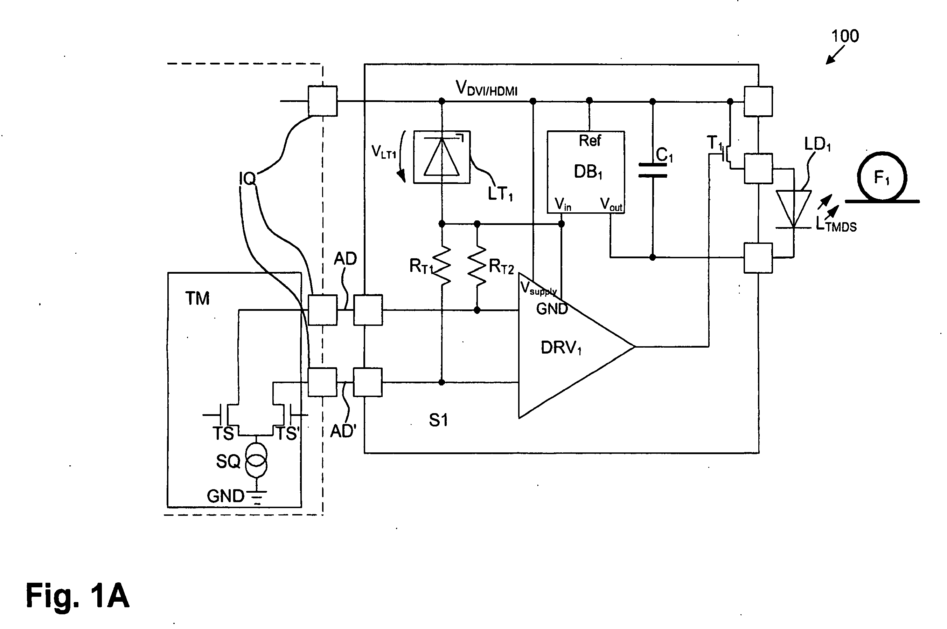

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 sowie dem Anspruch 12 nachgeordneten Ansprüche verwiesen, andererseits werden weitere Ausgestaltungen, Merkmale und Vorteile der vorliegenden Erfindung nachstehend unter Anderem anhand der durch Fig. 1A bis Fig. 2B veranschaulichten Ausführungsbeispiele näher erläutert. Es zeigt:
- Fig. 1A: in konzeptuell-schematischer Darstellung ein erstes Ausführungsbeispiel des ersten Teils, nämlich des gemäß der vorliegenden Erfindung ausgebildeten Treiberteils einer Schaltungsanordnung, der nach dem Verfahren gemäß der vorliegenden Erfindung arbeitet;
- Fig. 1 B: in konzeptuell-schematischer Darstellung ein zweites Ausführungsbeispiel des ersten Teils, nämlich des gemäß der vorliegenden Erfindung ausgebildeten Treiberteils einer Schaltungsanordnung, der nach dem Verfahren gemäß der vorliegenden Erfindung arbeitet;
- Fig. 2A: in konzeptuell-schematischer Darstellung ein erstes Ausführungsbeispiel des zweiten Teils, nämlich des gemäß der vorliegenden Erfindung ausgebildeten Transimpedanzwandlerteils einer Schaltungsanordnung, der nach dem Verfahren gemäß der vorliegenden Erfindung arbeitet;
- Fig. 2B: in konzeptuell-schematischer Darstellung ein zweites Ausführungsbeispiel des zweiten Teils, nämlich des gemäß der vorliegenden Erfindung ausgebildeten Transimpedanzwandlerteils einer Schaltungsanordnung, der nach dem Verfahren gemäß der vorliegenden Erfindung arbeitet; und
- Fig. 3: in konzeptuell-schematischer Darstellung ein Beispiel einer Schaltungsanordnung aus dem Stand der Technik.

Gleiche oder ähnliche Ausgestaltungen, Elemente oder Merkmale sind in Fig. 1A bis Fig. 3 mit identischen Bezugszeichen versehen.

### Bester Weg zur Ausführung der vorliegenden Erfindung

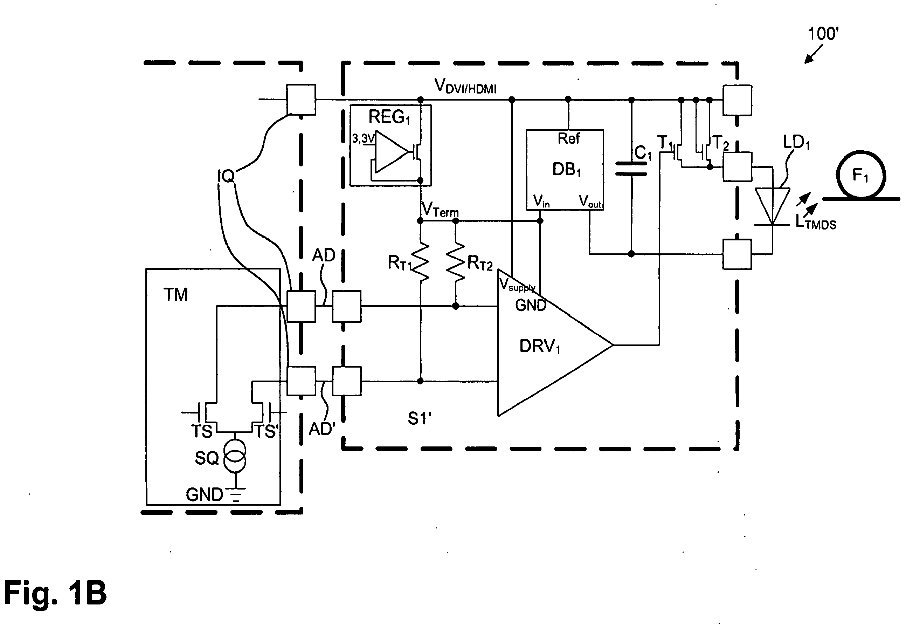

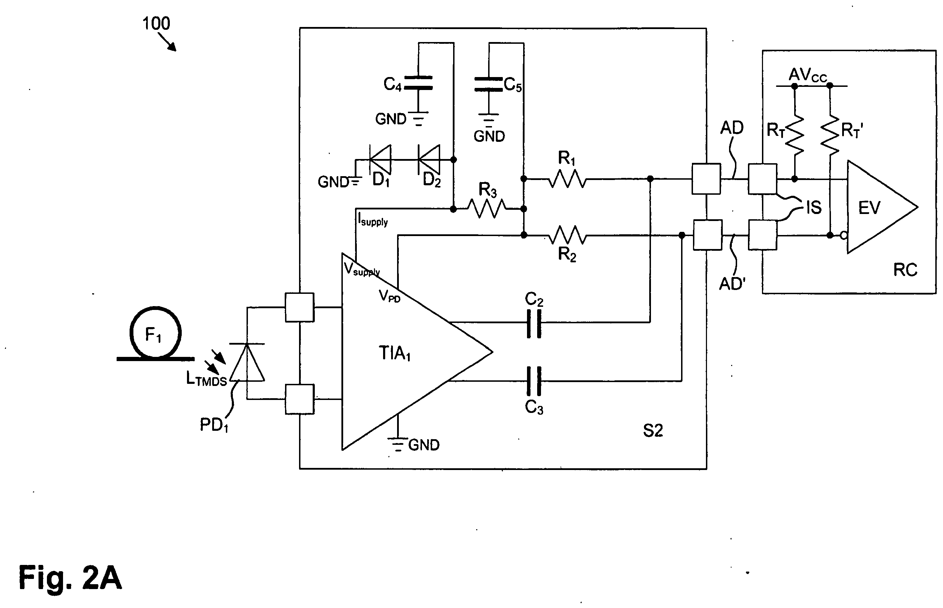

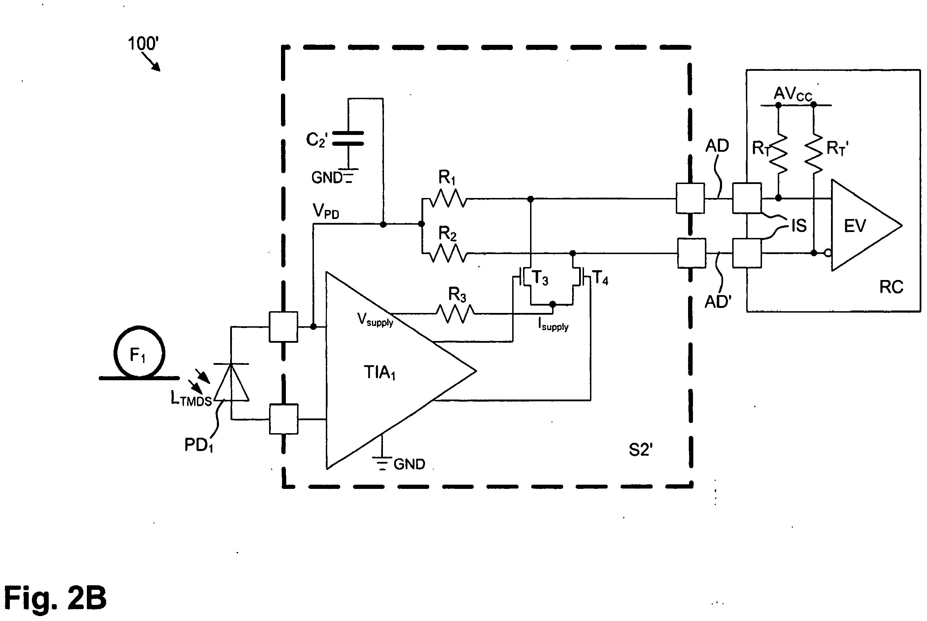

- Mittels der anhand Fig. 1A veranschaulichten Treiberschaltung S1 bzw. der anhand Fig. 1B veranschaulichten Treiberschaltung S1' gemäß der vorliegenden Erfindung und
- mittels der anhand Fig. 2A veranschaulichten Transimpedanzwandlerschaltung S2 bzw. der anhand Fig. 2B veranschaulichten Transimpedanzwandlerschaltung S2' gemäß der vorliegenden Erfindung,
durch die zusammen die Schaltungsanordnung 100 (vgl. Fig. 1A, Fig. 2A) bzw. die Schaltungsanordnung 100' (vgl. Fig. 1B, Fig. 2B) gemäß der vorliegenden Erfindung gebildet wird (im Rahmen der vorliegenden Erfindung ist es möglich, die Treiberschaltung S1, S1' und die Transimpedanzwandlerschaltung S2, S2' unabhängig voneinander zu realisieren und zu betreiben), ist es grundsätzlich möglich, eine kabelbasierte Verbindung zu realisieren und zu betreiben, die keiner weiteren elektrischen Versorgung - außer der an den elektrischen Kontakten ohnehin bereits vorhandenen elektrischen Versorgung - bedarf, und sich demzufolge nahtlos in mindestens einen DVI- und/oder HDMI-Übertragungskanal eines aktiven optischen Übertragungskabels einzufügen, ohne die existierende Verbindungsschnittstelle IQ der Datenquelle sowie die existierende Verbindungsschnittstelle IS der Datensenke modifizieren zu müssen oder diese Schnittstellen IQ, IS außerhalb der für diese Schnittstellen IQ, IS erlaubten Spezifikationen betreiben zu müssen.

In besonders bevorzugter Ausführung werden alle zur Bilddatenübertragung genutzten Signale einer DVI- und/oder HDMI-Verbindung auf diese Weise über optische Kanäle von der DVI-/HDMI-Quelle zur DVI-/HDMI-Senke übertragen.

Zur Vermeidung überflüssiger Wiederholungen beziehen sich die nachfolgenden Erläuterungen hinsichtlich der Ausgestaltungen, Merkmale und Vorteile der vorliegenden Erfindung - soweit nicht anderweitig angegeben -
- sowohl auf das in Fig. 1A dargestellte erste Ausführungsbeispiel des ersten Teils, nämlich des Treiberteils S1 einer Schaltungsanordnung 100 gemäß der vorliegenden Erfindung
- als auch auf das in Fig. 1B dargestellte zweite Ausführungsbeispiel des zweiten Teils, nämlich des Treiberteils S1' einer Schaltungsanordnung 100' gemäß der vorliegenden Erfindung.

Hierbei zeigen Fig. 1A bzw. Fig. 1B den prinzipiellen Aufbau des Treibers S1 bzw. S1' zum Anschluss an die Verbindungsschnittstelle IQ der Datenquelle. Diese Verbindungsschnittstelle IQ der Datenquelle stellt eine Spannungsversorgung V_{DVI/HDMI} in der Größenordnung von etwa fünf Volt zur Verfügung, die mit maximal etwa 55 Milliampere belastet werden darf.

Diese Versorgungsspannung V_{DVI/HDMI} wird dem Treiber S1 bzw. S1' zugeführt, der
- gemäß Fig. 1A ein zum Beispiel als Querregler oder Shunt-Regler (sogenannter shunt regulator) ausgebildetes spannungsbegrenzendes Element LT₁ bzw.
- gemäß Fig. 1B einen Spannungsregler REG₁
aufweist.

Des Weiteren weist der Treiber S1 bzw. S1' eine zum Beispiel als Spannungsverdoppler ausgebildete und/oder zum Beispiel als Gleichspannungswandler wirkende Spannungserhöhungsschaltung DB₁. Terminierungswiderstände R_{T1} und R_{T2}, einen Stützkondensator C₁, eine Eingangsverstärkerschaltung DRV₁ und einen Schalttransistor T₁ auf. Zusätzlich weist das zweite Ausführungsbeispiel des Treibers S1' gemäß Fig. 1B einen als Source-Folger (sogenannter source follower) arbeitenden Schalttransistor T2 auf.

An die Treiberschaltung S1 bzw. S1' ist mindestens ein lichtemittierendes Element LD₁, zum Beispiel mindestens eine Leuchtdiode, mindestens eine lichtemittierende Diode (= LED = Light Emitting Diode), mindestens eine Laserdiode oder mindestens ein Laser, wie etwa mindestens ein Halbleiterlaser, angeschlossen [im Rahmen der vorliegenden Erfindung wird unter dem Begriff Licht bzw. lichtemittierend nicht nur der für das Auge sichtbare Bereich der elektromagnetischen Strahlung verstanden, der sich in einem Wellenlängenbereich von etwa 380 Nanometer bis etwa 780 Nanometer erstreckt, was einer Frequenz von etwa 789 Terahertz bis herab zu etwa 385 Terahertz entspricht; vielmehr wird unter dem Begriff Licht bzw. lichtemittierend das gesamte, also auch das für das Auge nicht sichtbare elektromagnetische Wellenlängen- bzw. Frequenzspektrum verstanden, insbesondere der I[nfra]R[ot]-Bereich (Wellenlängenbereich bis zu etwa 2.000 Nanometer bzw. Frequenzbereich bis herab zu etwa 150 Terahertz), zum Beispiel eine Wellenlänge von etwa 850 Nanometer bzw. eine Frequenz von etwa 350 Terahertz].

Das lichtemittierende Element LD₁ koppelt das mit dem Datensignal beaufschlagte Licht L_{TMDS} in eine optische Faser F₁ ein. Über das spannungsbegrenzende Element LT₁ wird beim ersten Ausführungsbeispiel des Treibers S1 gemäß Fig. 1A eine definierte Potential- oder Spannungsdifferenz V_{LT1} erzeugt, die die Eingangsspannung für die Spannungserhöhungsschaltung DB₁ darstellt; entsprechend wird über das Spannungsregelelement REG₁ beim zweiten Ausführungsbeispiel des Treibers S1' gemäß Fig. 1 B eine definierte Terminierungspannung V_{Term} erzeugt, die die Eingangsspannung für die Spannungserhöhungsschaltung DB₁ darstellt.

Mittels der Spannungserhöhungsschaltung DB₁ wird
- diese Potential- oder Spannungsdifferenz V_{LT1} (vgl. erstes Ausführungsbeispiel des Treibers S1 gemäß Fig. 1A) bzw.
- diese Terminierungsspannung V_{Term} (vgl. zweites Ausführungsbeispiel des Treibers S1' gemäß Fig. 1B)
auf einen zum Betreiben des lichtemittierenden Elements LD₁ notwendigen Spannungsbetrag gebracht; zum Beispiel kann diese Potential- oder Spannungsdifferenz V_{LT1} bzw. diese Terminierungsspannung V_{Term} mittels der Spannungserhöhungsschaltung DB₁ um etwa den Faktor 1,5 auf eine zum Betreiben des lichtemittierenden Elements LD₁ notwendige Spannung von etwa 2,5 Volt gebracht werden.

Der Eingangsanschluss Vᵢₙ der Spannungserhöhungsschaltung DB₁ wird
- mit der Potential- oder Spannungsdifferenz V_{LT1} (vgl. erstes Ausführungsbeispiel des Treibers S1 gemäß Fig. 1A) bzw.
- mit der Terminierungsspannung V_{Term} (vgl. zweites Ausführungsbeispiel des Treibers S1' gemäß Fig. 1 B) beaufschlagt; der Ausgangsanschluss Vₒᵤₜ der Spannungserhöhungsschaltung DB₁ ist mit dem Stützkondensator C₁ sowie mit dem Ausgangsanschluss des lichtemittierenden Elements LD₁ verbunden; der Bezugsanschluss Ref der Spannungserhöhungsschaltung DB₁ liegt auf Versorgungsspannung V_{DVI/HDMI}; dementsprechend nutzt die Treiberschaltung S1 bzw. S1' die Versorgungsspannung V_{DVI/HDMI} als Bezugspunkt.

Über die Treiberschaltung S1 bzw. S1' wird sichergestellt, dass der aus einem TMDS-Transmitter TM zur Verfügung gestellte Gleichstromanteil zur Stromversorgung des lichtemittierenden Elements LD₁ genutzt wird. Mittels des Eingangsverstärkers DRV₁ und des Schalttransistors T₁ wird der Stromfluss durch das lichtemittierende Element LD₁ in Abhängigkeit vom differentiellen Ausgangssignal des TMDS-Transmitters TM moduliert.

Das Gate oder die Basis des Schalttransistors T₁ ist mit dem Ausgangsanschluss des Verstärkers DRV₁ verbunden. Das Drain oder der Kollektor des Schalttransistors T₁ ist der Versorgungsspannung V_{DVI/HDMI} zugeordnet; insbesondere liegt das Drain oder der Kollektor des Schalttransistors T₁ im Wesentlichen auf Versorgungsspannung V_{DVI/HDMI}. Das Source oder der Emitter des Schalttransistors T₁ ist mit dem Eingangsanschluss des lichtemittierenden Elements LD₁ verbunden.

Durch den als Source-Folger (sogenannter source follower) arbeitenden Transistor T2 wird beim zweiten Ausführungsbeispiel des Treibers S1' gemäß Fig. 1 B sichergestellt, dass am lichtemittierenden Element LD₁ auch während der Phasen, in denen der erste Transistor T₁ ausgeschaltet ist, stets eine Mindestspannung anliegt. Durch diese technische Maßnahme kann eine Verringerung der Einschaltverzögerung des lichtemittierenden Elements LD₁ erzielt werden, wodurch auch hohe Signalfrequenzen durch das lichtemittierende Element LD₁ übertragbar werden.

Das Gate oder die Basis des zweiten Schalttransistors T₂ ist der Versorgungsspannung V_{DVI/HDMI} zugeordnet; insbesondere kann das Gate oder die Basis des zweiten Schalttransistors T₂ auch geringfügig abweichend von der Versorgungsspannung V_{DVI/HDMI} gewählt werden, um eine Optimierung auf den günstigsten Arbeitspunkt des lichtemittierenden Elements LD₁ zu erzielen. Das Drain oder der Kollektor des zweiten Schalttransistors T₂ ist der Versorgungsspannung V_{DVI/HDMI} zugeordnet; insbesondere liegt das Drain oder der Kollektor des zweiten Schalttransistors T₂ im Wesentlichen auf Versorgungsspannung V_{DVI/HDMI}. Das Source oder der Emitter des zweiten Schalttransistors T₂ ist mit dem Source oder dem Emitter des Schalttransistors T₁ sowie mit dem Eingangsanschluss des lichtemittierenden Elements LD₁ verbunden.

Zur korrekten Einstellung des Arbeitspunkts der Ausgangsstufe des TMDS-Transmitters TM, dessen differentiellem Ausgang zwei spiegelbildlich zueinander geschaltete Transistoren TS, TS' vorgeschaltet sind, wird dem TMDS-Transmitter TM
- beim ersten Ausführungsbeispiel der Treiberschaltung S₁ gemäß Fig. 1A die Differenz aus Potential- oder Spannungsdifferenz V_{LT1} und Spannungsversorgung V_{DVI/HDMI}
- beim zweiten Ausführungsbeispiel der Treiberschaltung S1' gemäß Fig. 1B die Ausgangsspannung V_{Term} des Spannungsreglers REG₁
über die zum Zwecke der zumindest partiellen Terminierung der differentiellen Verbindungsleitung AD, AD' vorgesehenen Terminierungswiderstände R_{T1}, R_{T2} zur Verfügung gestellt.

Der erste Terminierungswiderstand R_{T1} ist zwischen den Eingangsanschluss des spannungsbegrenzenden Elements LT₁ (vgl. erstes Ausführungsbeispiel des Treibers S1 gemäß Fig. 1A) bzw. des Spannungsreglers REG₁ (vgl. zweites Ausführungsbeispiel des Treibers S1' gemäß Fig. 1B) und einen ersten Eingangsanschluss der Verstärkerschaltung DRV₁ geschaltet; der zweite Terminierungswiderstand R_{T2} ist zwischen den Eingangsanschluss des spannungsbegrenzenden Elements LT₁ (vgl. erstes Ausführungsbeispiel des Treibers S1 gemäß Fig. 1A) bzw. des Spannungsreglers REG₁ (vgl. zweites Ausführungsbeispiel des Treibers S1' gemäß Fig. 1 B) und einen zweiten Eingangsanschluss der Verstärkerschaltung DRV₁ geschaltet.

Zur Vermeidung überflüssiger Wiederholungen beziehen sich die nachfolgenden Erläuterungen hinsichtlich der Ausgestaltungen, Merkmale und Vorteile der vorliegenden Erfindung - soweit nicht anderweitig angegeben -
- sowohl auf das in Fig. 2A dargestellte erste Ausführungsbeispiel des zweiten Teils, nämlich des Transimpedanzwandlerteils S2 der Schaltungsanordnung 100 gemäß der vorliegenden Erfindung
- als auch auf das in Fig. 2B dargestellte zweite Ausführungsbeispiel des zweiten Teils, nämlich des Transimpedanzwandlerteils S2' der Schaltungsanordnung 100' gemäß der vorliegenden Erfindung.

Fig. 2A bzw. Fig. 2B zeigen den prinzipiellen Aufbau des Transimpedanzwandlers S2 bzw. S2' zum Anschluss an die Verbindungsschnittstelle IS der Datensenke. Diese Verbindungsschnittstelle IS der Datensenke hat keine explizite Spannungsversorgung, die dem Transimpedanzwandler S2 bzw. S2' die notwendige Energie zur Verfügung stellen könnte.

Jedoch dient der TMDS-Receiver RC der Verbindungsschnittstelle IS der Datensenke im Falle einer galvanischen Verbindung zwischen Datenquelle und Datensenke dazu, den TMDS-Transmitter TM korrekt zu terminieren und der Ausgangsstufe des TMDS-Transmitters TM über das differentielle Aderpaar AD, AD' zwischen Datenquelle und Datensenke die erforderliche Betriebsspannung zur Verfügung zu stellen; insbesondere wird die Transimpedanzwandlerschaltung S2 bzw. S2' über den am differentiellen Aderpaar AD, AD' anliegenden Gleichspannungsanteil versorgt.

Diesen Umstand nutzt die Transimpedanzwandlerschaltung S2 bzw. S2' aus, die einen Verstärker TIA₁ und Widerstände R₁, R₂, R₃ aufweist. Darüber hinaus
- weist das erste Ausführungsbeispiel der Transimpedanzwandlerschaltung S2 gemäß Fig. 2A Kopplungskondensatoren C₂ und C₃, Stützkondensatoren C₄ und C₅ sowie in Reihe zueinander geschaltete Siliziumdioden D₁ und D₂ auf,
- wohingegen das zweite Ausführungsbeispiel der Transimpedanzwandlerschaltung S2' gemäß Fig. 2B ein Paar von Schalttransistoren T₃, T₄ sowie einen Stützkondensator C₂' aufweist.

Der TMDS-Receiver RC der Verbindungsschnittstelle IS der Datensenke stellt über interne, parallel geschaltete Ohmsche Terminierungswiderstände R_{T}, R_{T}' an seinem differentiellen Eingang eine im Falle einer galvanischen Verbindung zwischen Datenquelle und Datensenke mit bis zu etwa zwölf Milliampere pro differentiellem Eingang belastbare Betriebsspannung AV_{CC} in der Größenordnung von etwa 3,3 Volt zur Verfügung. Gleichzeitig wird auf der Grundlage dieser Betriebsspannung AV_{CC} an der Terminierung R_{T}, R_{T}' im TMDS-Empfänger TM die für den Eingangsverstärker EV erforderliche Eingangssignalspannung generiert.

Der am differentiellen Eingang des TMDS-Receivers RC angeschlossene Transimpedanzwandler S2 bzw. S2' generiert aus der so zur Verfügung gestellten Betriebsspannung AV_{CC} über die zum Zwecke der zumindest partiellen Terminierung der differentiellen Verbindungsleitung AD, AD' vorgesehenen (Terminierungs-)Widerstände R₁, R₂ für den TMDS-Receiver RC die für die Einstellung des korrekten Arbeitspunkts notwendige V_{CM} oder Gleichtaktspannung (hierbei ist die V_{CM} oder Common Mode Voltage ein Kennwert von Operations- oder Differenzverstärkern, nämlich der Mittelwert der Eingangsspannungen am Operations- oder Differenzverstärker).

Beim ersten Ausführungsbeispiel der Transimpedanzwandlerschaltung S2 gemäß Fig. 2A wird diese Spannung über den Kondensator C₅ geglättet. Gleichzeitig wird diese Spannung beim ersten Ausführungsbeispiel der Transimpedanzwandlerschaltung S2 gemäß Fig. 2A dem Verstärker TIA₁ als Versorgungsspannung für die Sperrspannung V_{PD} einer dem Transimpedanzwandler S2 zugeordneten Photodiode PD, zur Verfügung gestellt.

Des Weiteren fließt beim ersten Ausführungsbeispiel der Transimpedanzwandlerschaltung S2 gemäß Fig. 2A der die Versorgungsspannung V_{supply} speisende Versorgungsstrom I_{supply} zumindest partiell über den ersten (Terminierungs-)Widerstand R₁ bzw. über den zweiten (Terminierungs-)Widerstand R₂ vom differentiellen Aderpaar AD, AD' zum Verstärker TIA₁. Grundsätzlich wird als Betriebs- oder Versorgungsstrom I_{supply} des Verstärkers TIA, der Strom aus der Ausgangsstufe eingesetzt.

Auch wird beim ersten Ausführungsbeispiel der Transimpedanzwandlerschaltung S2 gemäß Fig. 2A von diesem Schaltungsknotenpunkt die Spannung über den Vorwiderstand R₃ auf die beiden Siliziumdioden D_{1,} D₂ geführt. Über den für eine Siliziumdiode D₁, D₂ typischen Spannungsabfall wird beim ersten Ausführungsbeispiel der Transimpedanzwandlerschaltung S2 gemäß Fig. 2A am Knotenpunkt R₁, D₂, C₄ die korrekte Betriebsspannung V_{supply} von etwa 1,4 Volt für den Verstärker TIA₁ erzeugt, dessen differentieller Eingang dem lichtabsorbierenden Element PD₁ zugeordnet ist. Mittels des Stützkondensators C₄ wird diese Spannung geglättet.
- Über die beiden Kopplungskondensatoren C₂ und C₃ (vgl. erstes Ausführungsbeispiel der Transimpedanzwandlerschaltung S2 gemäß Fig. 2A) bzw.
- über die beiden Schalttransistoren T₃ und T₄ (vgl. zweites Ausführungsbeispiel der Transimpedanzwandlerschaltung S2' gemäß Fig. 2B)
wird das von der angeschlossenen Photodiode PD₁ kommende und mittels des Verstärkers TIA₁ verstärkte Signal auf den differentiellen Eingang des TMDS-Receivers RC gegeben.

Beim ersten Ausführungsbeispiel der Transimpedanzwandlerschaltung S2 gemäß Fig. 2A ist der erste Kopplungskondensator C₂ dem ersten Ausgang des Verstärkers TIA₁ zugeordnet; der zweite Kopplungskondensator C₃ ist dem zweiten Ausgang des Verstärkers TIA₁ zugeordnet.

Beim zweiten Ausführungsbeispiel der Transimpedanzwandlerschaltung S2' gemäß Fig. 2B ist der erste Schalttransistor T₃ dem ersten Ausgang des Verstärkers TIA₁ zugeordnet; der zweite Schalttransistor T₄ ist dem zweiten Ausgang des Verstärkers TIA₁ zugeordnet, der das zum ersten Ausgang des Verstärkers TIA₁ gegenphasige Signal des differentiellen Ausgangssignals bereitstellt.

Im Speziellen ist beim zweiten Ausführungsbeispiel der Transimpedanzwandlerschaltung S2' gemäß Fig. 2B das Gate oder die Basis des ersten Schalttransistors T₃ mit dem ersten Ausgangsanschluss des Verstärkers TIA₁ verbunden; das Drain oder der Kollektor des ersten Schalttransistors T₃ ist dem ersten (Terminierungs-)Widerstand R₁ zugeordnet; das Source oder der Emitter des ersten Schalttransistors T₃ liegt über den Vorwiderstand R₃ auf Betriebsspannung oder Versorgungsspannung V_{supply} für den Verstärker TIA₁.

Des Weiteren ist beim zweiten Ausführungsbeispiel der Transimpedanzwandlerschaltung S2' gemäß Fig. 2B das Gate oder die Basis des zweiten Schalttransistors T₄ mit dem zweiten Ausgangsanschluss des Verstärkers TIA₁ verbunden; das Drain oder der Kollektor des zweiten Schalttransistors T₄ ist dem zweiten (Terminierungs-)Widerstand R₂ zugeordnet; das Source oder der Emitter des zweiten Schalttransistors T₄ ist mit dem Source oder Emitter des ersten Schalttransistors T₃ verbunden und liegt über den Vorwiderstand R₃ auf Betriebsspannung oder Versorgungsspannung V_{supply} für den Verstärker TIA₁.

Durch das Umschalten der Schalttransistoren T₃ und T₄ wird beim zweiten Ausführungsbeispiel der Transimpedanzwandlerschaltung S2' gemäß Fig. 2B der Versorgungsstrom I_{supply} des Verstärkers TIA₁ wechselweise entweder der ersten Ader AD oder der zweiten Ader AD' entnommen, so dass dieser Versorgungsstrom I_{supply} im Wesentlichen dazu genutzt wird, die Ausgangsspannung des differentiellen Aderpaars AD, AD' in Abhängigkeit vom eintreffenden optischen Signal zu modulieren.

Entsprechend ist beim zweiten Ausführungsbeispiel der Transimpedanzwandlerschaltung S2' gemäß Fig. 2B der die Versorgungsspannung V_{supply} des Verstärkers TIA₁ speisende Versorgungsstrom I_{supply} zumindest partiell der durch das Schalttransistorpaar T₃, T₄ fließende Strom. Grundsätzlich wird als Betriebs- oder Versorgungsstrom I_{supply} des Verstärkers TIA₁ der Strom aus der Ausgangsstufe eingesetzt.

Die zum Betrieb der Transimpedanzwandlerschaltung S2 bzw. S2' erforderliche elektrische Leistung wird der Leistung entnommen, die sich als Produkt aus Gleichstromanteil in der Verbindung zwischen der Transimpedanzwandlerschaltung S2 bzw. S2' und dem TMDS-Receiver RC und aus Gleichspannungsanteil am TMDS-Receiver RC ergibt.

Die elektrische Leistung zum Betreiben des Verstärkers TIA₁ der Transimpedanzwandlerschaltung S2 bzw. S2' wird derjenigen elektrischen Leistung entnommen, die sich als Produkt aus Gleichstromanteil in der Verbindung zwischen der Transimpedanzwandlerschaltung S2 bzw. S2' und dem TMDS-Receiver RC und aus der Potentialdifferenz oder Spannungsdifferenz zwischen der Knotenspannung am Ausgang des TMDS-Transmitters TM und der ebenfalls an der TMDS-Schnittstelle in der Größenordnung von etwa drei Volt zur Verfügung stehenden Spannungsversorgung ergibt.

### Bezugszeichenliste

- 100: Schaltungsanordnung (= erstes Ausführungsbeispiel; vgl. Fig. 1A, Fig. 2A)
- 100': Schaltungsanordnung (= zweites Ausführungsbeispiel; vgl. Fig. 1B, Fig. 2B)
- AD: erste Ader des differentiellen Aderpaars AD, AD'
- AD': zweite Ader des differentiellen Aderpaars AD, AD'
- AV_{CC}: Betriebsspannung oder Versorgungsspannung
- C₁: Stützkondensator der Treiberschaltung S1, S1'
- C₂: erster Kopplungskondensator der Transimpedanzwandlerschaltung S2
- C₂': Stützkondensator der Transimpedanzwandlerschaltung S2'
- C₃: zweiter Kopplungskondensator der Transimpedanzwandlerschaltung S2
- C₄: erster Stützkondensator der Transimpedanzwandlerschaltung S2
- C₅: zweiter Stützkondensator der Transimpedanzwandlerschaltung S2
- D: erster Schalter des Ausgangsstromtreibers oder Transmitters TM (= Beispiel aus dem Stand der Technik; vgl. Fig. 3)
- D': zweiter Schalter des Ausgangsstromtreibers oder Transmitters TM (= Beispiel aus dem Stand der Technik; vgl. Fig. 3)
- D₁: erste Siliziumdiode der Transimpedanzwandlerschaltung S2
- D₂: zweite Siliziumdiode der Transimpedanzwandlerschaltung S2
- DB₁: Spannungserhöhungsschaltung, insbesondere Spannungsverdoppler, der Treiberschaltung S1, S1'
- DRV₁: Verstärkerschaltung, insbesondere Eingangsverstärker, der Treiberschaltung S1, S1'
- EV: Verstärkerschaltung, insbesondere Eingangsverstärker, des Empfängers oder Receivers RC
- F₁: optische Faser, insbesondere Glasfaser oder Kunststofffaser, zum Beispiel Plastikfaser, zwischen Datenquelle und Datensenke
- GND: Erdpotential oder Massepotential oder Nullpotential
- IQ: einer Datenquelle zugeordnete Verbindungsschnittstelle, insbesondere DVI-/HDMI-Verbindungsschnittstelle
- IS: einer Datensenke zugeordnete Verbindungsschnittstelle, insbesondere DVI-/HDMI-Verbindungsschnittstelle
- I_{supply}: Betriebsstrom oder Versorgungsstrom für Verstärker TIA₁
- KK: Übertragungskanal, insbesondere Kupferkabel, zwischen Datenquelle und Datensenke (= Beispiel aus dem Stand der Technik; vgl. Fig. 3)
- L_{TMDS}: mit TMDS-kodiertem Signal beaufschlagtes Licht
- LD₁: der Treiberschaltung S1, S1' zugeordnetes lichtemittierendes Element, insbesondere Leuchtdiode, lichtemittierende Diode, Laserdiode oder Laser, zum Beispiel Halbleiterlaser
- LT₁: spannungsbegrenzendes Element, insbesondere Querregler oder Shunt-Regler oder shunt regulator, der Treiberschaltung S1
- PD₁: der Transimpedanzwandlerschaltung S2, S2' zugeordnetes lichtabsorbierendes Element, insbesondere Photodiode
- R₁: erster, insbesondere Ohmscher, Widerstand, zum Beispiel erster Terminierungswiderstand, der Transimpedanzwandlerschaltung S2, S2'
- R₂: zweiter, insbesondere Ohmscher, Widerstand, zum Beispiel zweiter Terminierungswiderstand, der Transimpedanzwandlerschaltung S2, S2'
- R₃: dritter, insbesondere Ohmscher, Widerstand, zum Beispiel Vorwiderstand, der Transimpedanzwandlerschaltung S2, S2'
- RC: Empfänger, insbesondere TMDS-Empfänger, oder Receiver, insbesondere TMDS- Receiver
- Ref: Bezugsanschluss der Spannungserhöhungsschaltung DB₁
- REG₁: Spannungsregelelement oder Spannungsregler der Treiberschaltung S1'
- R_{T}: erster, insbesondere Ohmscher, Terminierungswiderstand des Empfängers oder Receivers RC
- R_{T}': zweiter, insbesondere Ohmscher, Terminierungswiderstand des Empfängers oder Receivers RC
- R_{T1}: erster, insbesondere Ohmscher, Terminierungswiderstand der Treiberschaltung S1, S1'
- R_{T2}: zweiter, insbesondere Ohmscher, Terminierungswiderstand der Treiberschaltung S1, S1'
- S1: Treiberschaltung oder Treiber (= erstes Ausführungsbeispiel; vgl. Fig. 1A)
- S1': Treiberschaltung oder Treiber (= zweites Ausführungsbeispiel; vgl. Fig. 1 B)
- S2: Transimpedanzwandlerschaltung oder Transimpedanzwandler (= erstes Ausführungsbeispiel; vgl. Fig. 2A)
- S2': Transimpedanzwandlerschaltung oder Transimpedanzwandler (= zweites Ausführungsbeispiel; vgl. Fig. 2B)
- SQ: Stromquelle des Ausgangsstromtreibers oder Transmitters TM
- T₁: Schalttransistor, insbesondere erster Schalttransistor, der Treiberschaltung S1, S1'
- T₂: zweiter Schalttransistor, insbesondere Source-Folger oder source follower, der Treiberschaltung S1'
- T₃: erster Schalttransistor der Transimpedanzwandlerschaltung S2'
- T₄: zweiter Schalttransistor der Transimpedanzwandlerschaltung S2'
- TIA₁: Verstärkerschaltung oder Verstärker der Transimpedanzwandlerschaltung S2, S2'
- TM: Ausgangsstromtreiber, insbesondere TMDS-Ausgangsstromtreiber, oder Transmitter, insbesondere TM DS-Transmitter
- TS: erster Transistor des Ausgangsstromtreibers oder Transmitters TM
- TS': zweiter, insbesondere spiegelbildlich zum ersten Transistor T geschalteter, Transistor des Ausgangsstromtreibers oder Transmitters TM
- V_{DVI/HDMI}: Versorgungsspannung, insbesondere von etwa fünf Volt
- Vᵢₙ: Potential oder Spannung des Eingangsanschlusses der Spannungserhöhungsschaltung DB₁
- V_{LT1}: durch spannungsbegrenzendes Element LT₁ definierte Potentialdifferenz oder Spannungsdifferenz
- Vₒᵤₜ: Potential oder Spannung des Ausgangsanschlusses der Spannungserhöhungsschaltung DB₁
- V_{PD}: Sperrspannung des lichtabsorbierenden Elements PD₁
- V_{supply}: Betriebsspannung oder Versorgungsspannung für Verstärker TIA₁
- V_{Term}: durch Spannungsregelelement oder Spannungsregler REG₁ definierte(s) Terminierungspotenzial oder
- .: Terminierungsspannung
- Z₀: Impedanz des differentiellen Aderpaars AD, AD' des Kupferkabels KK (= Beispiel aus dem Stand der Technik; vgl. Fig. 3)

## Patentansprüche

1. Schaltungsanordnung (100; 100') zum Übertragen von, insbesondere mindestens einer DVI-Datenverbindung und/oder mindestens einer HDMI-Datenverbindung zugeordneten, zumindest partiell, insbesondere zumindest zeitabschnittsweise, TMDS-kodierten Signalen von mindestens einer Datenquelle zu mindestens einer Datensenke,
- wobei die Schaltungsanordnung (100; 100') mindestens eine Treiberschaltung (S1; S1') aufweist,
- die mindestens einer der Datenquelle zugeordneten Verbindungsschnittstelle (IQ) nachgeschaltet ist und von dieser Verbindungsschnittstelle (IQ) mit einer, insbesondere mit bis zu etwa 55 Milliampere belastbaren, Versorgungsspannung (V_{DVI/HDMI}), zum Beispiel in der Größenordnung von etwa fünf Volt, versorgbar ist,
- die mindestens einem zum elektro-optischen Umwandeln der elektrischen TMDS-kodierten Signale vorgesehenen lichtemittierenden Element (LD₁), insbesondere mindestens einer Leuchtdiode, mindestens einer lichtemittierenden Diode, mindestens eine Laserdiode oder mindestens einem Laser, zum Beispiel mindestens einem Halbleiterlaser, vorgeschaltet ist, mittels welchen lichtemittierenden Elements (LD₁) mit den TMDS-kodierten Signalen beaufschlagtes Licht (L_{TMDS}) in mindestens eine optische Faser (F₁), insbesondere in mindestens eine Glasfaser oder in mindestens eine Kunststofffaser, zum Beispiel in mindestens eine Plastikfaser, einkoppelbar ist, und
- die mindestens eine, insbesondere als Spannungsverdoppler ausgebildete und/oder als Gleichspannungswandler wirkende, Spannungserhöhungsschaltung (DB₁) aufweist, mittels derer elektrische Energie, insbesondere elektrische Leistung, aus einer,
--- insbesondere mittels mindestens eines spannungsbegrenzenden Elements (LT₁), zum Beispiel mittels mindestens eines Querreglers oder Shunt-Reglers, bereitstellbaren, Potentialdifferenz oder Spannungsdifferenz (V_{LT1}) bzw.,
--- insbesondere mittels mindestens eines Spannungsregelelements oder Spannungsreglers (REG₁) bereitstellbaren, Terminierungsspannung (V_{Term}) entnehmbar und/oder abgebbar ist.

2. Schaltungsanordnung gemäß Anspruch 1, **dadurch gekennzeichnet, dass** die elektrische Energie
- entnehmbar ist, indem die Spannungserhöhungsschaltung (DB₁) die Potentialdifferenz oder Spannungsdifferenz (V_{LT1}) bzw. die Terminierungsspannung (V_{Term}) mit fließendem Strom belastet, der insbesondere so gerichtet ist, dass er die Potentialdifferenz oder Spannungsdifferenz (V_{LT1}) bzw. die Terminierungsspannung (V_{Term}) zu vermindern versucht, und/oder
- abgebbar ist, indem die Spannungserhöhungsschaltung (DB₁) eine zum Betreiben des lichtemittierenden Elements (LD₁) bestimmte höhere Potentialdifferenz oder Spannungsdifferenz zwischen dem Bezugsanschluss (Ref) der Spannungserhöhungsschaltung (DB₁) und dem Potential oder der Spannung (Vₒᵤₜ) des Ausgangsanschlusses der Spannungserhöhungsschaltung (DB₁) mit fließendem Strom versorgt, der insbesondere so gerichtet ist, dass er die höhere Potentialdifferenz oder Spannungsdifferenz zu vergrößern versucht.

3. Schaltungsanordnung gemäß Anspruch 1 oder 2, **dadurch gekennzeichnet, dass** die Treiberschaltung (S1 bzw. S1') mindestens eine Verstärkerschaltung (DRV₁), insbesondere mindestens einen Eingangsverstärker, und mindestens einen Schalttransistor (T₁) zum Modulieren des durch das lichtemittierende Element (LD₁) fließenden Stroms, insbesondere in Abhängigkeit vom differentiellen Ausgangssignal mindestens eines TMDS-Transmitters (TM) der der Datenquelle zugeordneten Verbindungsschnittstelle (IQ), aufweist,
- wobei das Gate oder die Basis des Schalttransistors (T₁) mit dem Ausgangsanschluss der Verstärkerschaltung (DRV₁) verbunden ist,
- wobei das Drain oder der Kollektor des Schalttransistors (T₁) der Versorgungsspannung (V_{DVI/HDMI}) zugeordnet ist, insbesondere im Wesentlichen auf Versorgungsspannung (V_{DVI/HDMI}) liegt,
- wobei das Source oder der Emitter des Schalttransistors (T₁) mit dem Eingangsanschluss des lichtemittierenden Elements (LD₁) verbunden ist.

4. Schaltungsanordnung gemäß Anspruch 3, **dadurch gekennzeichnet, dass** die Treiberschaltung (S1') mindestens einen, insbesondere als Source-Folger ausgebildeten, zweiten Schalttransistor (T₂) aufweist,
- wobei das Gate oder die Basis des zweiten Schalttransistors (T₂) der Versorgungsspannung (V_{DVI/HDMI}) zugeordnet ist, insbesondere geringfügig abweichend von der Versorgungsspannung (V_{DVI/HDMI}) einstellbar ist,
- wobei das Drain oder der Kollektor des zweiten Schalttransistors (T₂) der Versorgungsspannung (V_{DVI/HDMI}) zugeordnet ist, insbesondere im Wesentlichen auf Versorgungsspannung (V_{DVI/HDMI}) liegt,
- wobei das Source oder der Emitter des zweiten Schalttransistors (T₂) mit dem Source oder dem Emitter des ersten Schalttransistors (T₁) und mit dem Eingangsanschluss des lichtemittierenden Elements (LD₁) verbunden ist.

5. Schaltungsanordnung gemäß mindestens einem der Ansprüche 1 bis 4, **dadurch gekennzeichnet, dass** die Treiberschaltung (S1 bzw. S1') zum zumindest partiellen Terminieren des differentiellen Aderpaars (AD, AD')
- mindestens einen ersten, zwischen den Eingangsanschluss des spannungsbegrenzenden Elements (LT₁) bzw. des Spannungsregelelements oder Spannungsreglers (REG₁) und einen ersten Eingangsanschluss der Verstärkerschaltung (DRV₁) geschalteten Terminierungswiderstand (R_{T1}) sowie
- mindestens einen zweiten, zwischen den Eingangsanschluss des spannungsbegrenzenden Elements (LT₁) bzw. des Spannungsregelelements oder Spannungsreglers (REG₁) und einen zweiten Eingangsanschluss der Verstärkerschaltung (DRV₁) geschalteten Terminierungswiderstand (R_{T2}) aufweist, mittels welcher Terminierungswiderstände (R_{T1}, R_{T2}) dem TMDS-Transmitter (TM) zum Einstellen des Arbeitspunkts seiner Ausgangsstufe die Differenz aus Potentialdifferenz oder Spannungsdifferenz (V_{LT1}) und Versorgungsspannung (V_{DVI/HDMI}) bzw. die Terminierungsspannung (V_{Term}) zur Verfügung gestellt werden kann.

6. Schaltungsanordnung gemäß mindestens einem der Ansprüche 1 bis 5, **dadurch gekennzeichnet, dass** die Schaltungsanordnung (100; 100') mindestens eine Transimpedanzwandlerschaltung (S2; S2') aufweist,
- die mindestens einem zum opto-elektrischen Umwandeln des mit den TMDS-kodierten Signalen beaufschlagten Licht (L_{TMDS}) vorgesehenen lichtabsorbierenden Element (PD₁), insbesondere mindestens einer Photodiode, nachgeschaltet ist, mittels welchen lichtabsorbierenden Elements (PD₁) das mit den TMDS-kodierten Signalen beaufschlagte Licht (L_{TMDS}) aus der optischen Faser (F₁) auskoppelbar ist,
- die mindestens einer der Datensenke zugeordneten Verbindungsschnittstelle (IS) vorgeschaltet ist und
- die über einen an mindestens einem differentiellen Aderpaar (AD, AD') anliegenden Gleichspannungsanteil versorgbar ist.

7. Schaltungsanordnung gemäß mindestens einem der Ansprüche 1 bis 6, **dadurch gekennzeichnet, dass**, insbesondere im Falle mindestens einer galvanischen Verbindung zwischen Datenquelle und Datensenke,
- der TMDS-Transmitter (TM) mittels mindestens eines der der Datensenke zugeordneten Verbindungsschnittstelle (IS) zugeordneten TMDS-Receivers (RC) terminierbar ist, an dessen differentiellem Eingang die Transimpedanzwandlerschaltung (S2; S2') angeschlossen ist,
- der Transimpedanzwandlerschaltung (S2; S2'), insbesondere im Falle mindestens einer galvanischen Verbindung zwischen Datenquelle und Datensenke, mittels mindestens zweier Terminierungswiderstände (R_{T}, R_{T}') des TMDS-Receivers (RC) eine, insbesondere mit bis zu etwa zwölf Milliampere je differentiellem Eingang belastbare, Betriebsspannung (AV_{CC}), zum Beispiel in der Größenordnung von etwa 3,3 Volt, zur Verfügung stellbar ist und/oder
- dem TMDS-Transmitter (TM), insbesondere der Ausgangsstufe des TMDS-Transmitters (TM), über das differentielle Aderpaar (AD, AD') eine Betriebsspannung zur Verfügung stellbar ist.

8. Schaltungsanordnung gemäß mindestens einem der Ansprüche 1 bis 7, **dadurch gekennzeichnet, dass** die Transimpedanzwandlerschaltung (S2)
- mindestens einen Verstärker (TIA₁), dessen differentieller Eingang dem lichtabsorbierenden Element (PD₁) zugeordnet ist, und
- mindestens einen dem ersten Ausgang des Verstärkers (TIA₁) zugeordneten ersten Kopplungskondensator (C₂) sowie mindestens einen dem zweiten Ausgang des Verstärkers (TIA₁) zugeordneten zweiten Kopplungskondensator (C₃) zum Beaufschlagen des differentiellen Eingangs des TMDS-Receivers (RC) mit den vom lichtabsorbierenden Element (PD₁) aufgenommenen und mittels des Verstärkers (TIA₁) verstärkten TMDS-kodierten Signalen
aufweist.

9. Schaltungsanordnung gemäß Anspruch 8, **dadurch gekennzeichnet,**
- **dass** die Transimpedanzwandlerschaltung (S2) zum zumindest partiellen Terminieren des differentiellen Aderpaars (AD, AD')
-- mindestens einen ersten Widerstand (R₁), insbesondere mindestens einen ersten Terminierungswiderstand, sowie
-- mindestens einen zweiten Widerstand (R₂), insbesondere mindestens einen zweiten Terminierungswiderstand,
aufweist, mittels welcher Widerstände (R₁, R₂) der Arbeitspunkt der Eingangsstufe des TMDS-Receivers (RC) mittels Generieren einer Gleichtaktspannung für den TMDS-Receiver (RC) aus der Betriebsspannung (AV_{CC}) eingestellt werden kann, und
- **dass** der die Versorgungsspannung (V_{supply}) speisende Versorgungsstrom (I_{supply}) zumindest partiell über den ersten Widerstand (R₁) und/oder über den zweiten Widerstand (R₂) vom differentiellen Aderpaar (AD, AD') zum Verstärker (TIA₁) fließt.

10. Schaltungsanordnung gemäß mindestens einem der Ansprüche 1 bis 7, **dadurch gekennzeichnet, dass** die Transimpedanzwandlerschaltung (S2')
- mindestens einen Verstärker (TIA₁), dessen differentieller Eingang dem lichtabsorbierenden Element (PD₁) zugeordnet ist, und
- mindestens einen dem ersten Ausgang des Verstärkers (TIA₁) zugeordneten ersten Schalttransistor (T₃) sowie mindestens einen dem zweiten Ausgang des Verstärkers (TIA₁) zugeordneten zweiten Schalttransistor (T₄) zum Beaufschlagen des differentiellen Eingangs des TMDS-Receivers (RC) mit den vom lichtabsorbierenden Element (PD₁) aufgenommenen und mittels des Verstärkers (TIA₁) verstärkten TMDS-kodierten Signalen
aufweist, wobei der die Versorgungsspannung (V_{supply}) speisende Versorgungsstrom (I_{supply}) des Verstärkers (TIA₁) zumindest partiell der durch die Schalttransistoren (T₃, T₄) fließende Strom ist.

11. Schaltungsanordnung gemäß Anspruch 10, **dadurch gekennzeichnet, dass** die Transimpedanzwandlerschaltung (S2') zum zumindest partiellen Terminieren des differentiellen Aderpaars (AD, AD')
- mindestens einen ersten Widerstand (R₁), insbesondere mindestens einen ersten Terminierungswiderstand, sowie
- mindestens einen zweiten Widerstand (R₂), insbesondere mindestens einen zweiten Terminierungswiderstand,
aufweist, mittels welcher Widerstände (R₁, R₂) der Arbeitspunkt der Eingangsstufe des TMDS-Receivers (RC) mittels Generieren einer Gleichtaktspannung für den TMDS-Receiver (RC) aus der Betriebsspannung (AV_{CC}) eingestellt werden kann.

12. Verfahren zum Übertragen von, insbesondere mindestens einer DVI-Datenverbindung und/oder mindestens einer HDMI-Datenverbindung zugeordneten, zumindest partiell, insbesondere zumindest zeitabschnittsweise, TMDS-kodierten Signalen von mindestens einer Datenquelle zu mindestens einer Datensenke,
- wobei mindestens eine Treiberschaltung (S1; S1') von mindestens einer vorgeschalteten, der Datenquelle zugeordneten Verbindungsschnittstelle (IQ) mit einer, insbesondere mit bis zu etwa 55 Milliampere belastbaren, Versorgungsspannung (V_{DVI/HDMI}), zum Beispiel in der Größenordnung von etwa fünf Volt, versorgt wird,
- wobei die elektrischen TMDS-kodierten Signale mittels mindestens eines der Treiberschaltung (S1; S1') nachgeschalteten lichtemittierenden Elements (LD₁), insbesondere mittels mindestens einer Leuchtdiode, mittels mindestens einer lichtemittierenden Diode, mittels mindestens eine Laserdiode oder mittels mindestens eines Lasers, zum Beispiel mittels mindestens eines Halbleiterlasers, elektro-optisch umgewandelt und als mit den TMDS-kodierten Signalen beaufschlagtes Licht (L_{TMDS}) in mindestens eine optische Faser (F₁), insbesondere in mindestens eine Glasfaser oder in mindestens eine Kunststofffaser, zum Beispiel in mindestens eine Plastikfaser, eingekoppelt werden,
- wobei der aus mindestens einem TMDS-Transmitter (TM) der der Datenquelle zugeordneten Verbindungsschnittstelle (IQ) zur Verfügung gestellte Gleichstromanteil mittels der Treiberschaltung (S1; S1') in einen modulierten Signalstrom zur Ansteuerung des lichtemittierenden Elements (LD₁) umgeformt wird,
- wobei das mit den TMDS-kodierten Signalen beaufschlagte Licht (L_{TMDS}) mittels mindestens eines lichtabsorbierenden Elements (PD₁), insbesondere mittels mindestens einer Photodiode, aus der optischen Faser (F₁) ausgekoppelt, opto-elektrisch umgewandelt und in mindestens eine dem lichtabsorbierenden Element (PD₁) nachgeschaltete, mindestens einer der Datensenke zugeordneten Verbindungsschnittstelle (IS) vorgeschaltete Transimpedanzwandlerschaltung (S2; S2') eingespeist wird, wobei die Transimpedanzwandlerschaltung (S2; S2') über einen an mindestens einem differentiellen Aderpaar (AD, AD') anliegenden Gleichspannungsanteil versorgt wird.

13. Verfahren gemäß Anspruch 12, **dadurch gekennzeichnet, dass** elektrische Energie, insbesondere elektrische Leistung, zum Betreiben der Transimpedanzwandlerschaltung (S2; S2') derjenigen elektrischen Energie, insbesondere derjenigen elektrischen Leistung, entnommen wird, die sich als Produkt aus Gleichstromanteil in der Verbindung zwischen der Transimpedanzwandlerschaltung (S2; S2') und mindestens einem der der Datensenke zugeordneten Verbindungsschnittstelle (IS) zugeordneten TMDS-Receiver (RC) und dem Gleichspannungsanteil am TMDS-Receiver (RC) ergibt.

14. Verfahren gemäß Anspruch 12 oder 13, **dadurch gekennzeichnet, dass**, insbesondere im Falle mindestens einer galvanischen Verbindung zwischen Datenquelle und Datensenke,
- der TMDS-Transmitter (TM) mittels mindestens eines TMDS-Receivers (RC) der der Datensenke zugeordneten Verbindungsschnittstelle (IS) terminiert wird,
- dem TMDS-Transmitter (TM), insbesondere der Ausgangsstufe des TMDS-Transmitters (TM), über das differentielle Aderpaar (AD, AD') zwischen Datenquelle und Datensenke eine Betriebsspannung zur Verfügung gestellt wird,
- die Treiberschaltung (S1; S1') von der der Datenquelle zugeordneten Verbindungsschnittstelle (IQ) mit einer, insbesondere mit bis zu etwa 55 Milliampere belastbaren, Versorgungsspannung (V_{DVI/HDMI}), zum Beispiel in der Größenordnung von etwa fünf Volt, versorgt wird,
- der Transimpedanzwandlerschaltung (S2; S2') mittels mindestens zweier Terminierungswiderstände (R_{T}, R_{T}') des TMDS-Receivers (RC) eine, insbesondere mit bis zu etwa zwölf Milliampere je differentiellem Eingang belastbare, Betriebsspannung (AV_{CC}), zum Beispiel in der Größenordnung von etwa 3,3 Volt, zur Verfügung gestellt wird.

15. Verwendung mindestens einer Schaltungsanordnung (100; 100') gemäß mindestens einem der Ansprüche 1 bis 11 und/oder eines Verfahrens gemäß mindestens einem der Ansprüche 12 bis 14 bei der Signalverbindung, insbesondere in mindestens einer Kabelverbindung, zum Beispiel in mindestens einem aktiven optischen Übertragungskabel, zwischen mindestens einer HDTV-Datenquelle, zum Beispiel mindestens einem Blu-Ray-Player, und mindestens einer HDTV-Datensenke, zum Beispiel mindestens einem sehr hochauflösenden Flachbildschirm.

## Claims

1. A circuit arrangement (100; 100') for transmitting signals from at least one data source to at least one data sink, said signals being TMDS encoded at least in part, in particular at least in a time slot manner, and in particular being assigned to at least one DVI data connection and/or to at least one HDMI data connection,
- the circuit arrangement (100; 100') comprising at least one driver circuit (S1; S1')
-- being connected downstream of at least one connection interface (IQ), which is assigned to the data source, and being suppliable by said connection interface (IQ) with a supply voltage (V_{DVI/HDMI}), for example in the order of about five volt, said supply voltage (V_{DVI/HDMI}) in particular being able to supply up to about 55 milliampere,
-- being connected upstream of at least one light-emitting element (LD₁), in particular of at least one light diode, of at least one light-emitting diode, of at least one laser diode or of at least one laser, for example of at least one semiconductor laser, said light-emitting element (LD₁) being provided for electro-optically converting the electrical TMDS encoded signals, wherein light (L_{TMDS}) being supplied with the TMDS encoded signals is coupleable into at least one optical fibre (F₁), in particular into at least one glass fibre or into at least one plastic material fibre, for example into at least one plastic fiber, by means of said light-emitting element (LD₁), and
-- comprising at least one voltage increasing circuit (DB₁), in particular being implemented as voltage doubler and/or in particular operating as direct voltage converter, by means of which voltage increasing circuit (DB₁) electrical energy, in particular electrical power, can be taken and/or given from a
--- potential difference or voltage difference (V_{LT1}), in particular providable by means of at least one voltage-limiting element (LT₁), for example by means of at least one parallel voltage regulator or shunt regulator, or
--- termination voltage (V_{Term}), in particular providable by means of at least one voltage regulating element or voltage regulator (REG₁).

2. The circuit arrangement according to claim 1, **characterized in that** the electrical energy
- can be taken **in that** the voltage increasing circuit (DB₁) charges the potential difference or voltage difference (V_{LT1}) or the termination voltage (V_{Term}) with current flowing, in particular being directed such that the current tries to reduce the potential difference or voltage difference (V_{LT1}) or the termination voltage (V_{Term}), and/or
- can be given **in that** the voltage increasing circuit (DB₁) supplies a higher potential difference or voltage difference between the reference terminal (Ref) of the voltage increasing circuit (DB₁) and the potential or the voltage (Vₒᵤₜ) of the output terminal of the voltage increasing circuit (OB₁) with current flowing, in particular being directed such that the current tries to increase the higher potential difference or voltage difference, wherein the light-emitting element (LD₁) is operated with said higher potential difference or voltage difference.

3. The circuit arrangement according to claim 1 or 2, **characterized in that** the driver circuit (S1 or S1') comprises at least one amplifier circuit (DRV₁), in particular at least one input amplifier, and at least one switching transistor (T₁) for modulating the current flowing through the light-emitting element (LD₁), in particular in dependence on the differential output signal of at least one TMDS transmitters (TM) of the connection interface (IQ) being assigned to the data source,
- wherein the gate or the base of the switching transistor (T₁) is connected with the output terminal of the amplifier circuit (DRV₁),
- wherein the drain or the collector of the switching transistor (T₁) is assigned to the supply voltage (V_{DVI/HDMI}), in particular with the drain or the collector of the switching transistor (T₁) lying essentially on supply voltage (V_{DVI/HDMI}).
- wherein the source or the emitter of the switching transistor (T₁) is connected with the input terminal of the the light-emitting element (LD₁).

4. The circuit arrangement according to claim 3, **characterized in that** the driver circuit (S1') comprises at least one second switching transistor (T₂), in particular being implemented as source follower,
- wherein the gate or the base of the second switching transistor (T₂) is assigned to the supply voltage (V_{DVI/HDMI})_{,} in particular with the gate or the base of the second switching transistor (T₂) being adjustable slightly differing from the supply voltage (V_{DVI/HDMI}),
- wherein the drain or the collector of the second switching transistor (T₂) is assigned to the supply voltage (V_{DVI/HDMI}), in particular with the drain or the collector of the second switching transistor (T₂) lying essentially on supply voltage (V_{DVI/HDMI}),
- wherein the source or the emitter of the second switching transistor (T₂) is connected with the source or the emitter of the first switching transistor (T₁) and with the input terminal of the light-emitting element (LD₁).

5. The circuit arrangement according to at least one of claims 1 to 4, **characterized in that**, for at least partially terminating the differential pair of wires (AD, AD'), the driver circuit (S1 or S1') comprises
- at least one first terminating resistor (R_{T1}) being connected between the input terminal of the voltage-limiting element (LT₁) or of the voltage regulating element or voltage regulator (REG₁) and a first input terminal of the amplifier circuit (DRV₁), and
- at least one second terminating resistor (R_{T2}) being connected between the input terminal of the voltage-limiting element (LT₁) or of the voltage regulating element or voltage regulator (REG₁) and a second input terminal of the amplifier circuit (DRV₁),
by means of which terminating resistors (R_{T1}, R_{T2}) the TMDS transmitter (TM) can be supplied with the difference between potential difference or voltage difference (V_{LT1}) and supply voltage (V_{DVI/HDMI}) or with the termination voltage (V_{Term}), in order to adjust the operating point of the output stage of the TMDS transmitter (TM).

6. The circuit arrangement according to at least one of claims 1 to 5, **characterized in that** the circuit arrangement (100; 100') comprises at least one transimpedance converter circuit (S2; S2'),
- being connected downstream of at least one light-absorbing element (PD₁), in particular of at least one photodiode, said light-absorbing element (PD₁) being provided for opto-electrically converting the light (L_{TMDS}) being supplied with the TMDS encoded signals, wherein the light (L_{TMDS}) being supplied with the TMDS encoded signals is coupleable out from the optical fibre (F₁) by means of said light-absorbing element (PD₁),
- being connected upstream of at least one connection interface (IS) being assigned to the data sink, and
- being suppliable by a direct voltage portion being applied to at least one differential pair of wires (AD, AD').

7. The circuit arrangement according to at least one of claims 1 to 6, **characterized in that**, in particular in case of at least one galvanic connection between the data source and the data sink,
- the TMDS transmitter (TM) is terminable by means of at least one TMDS receiver (RC), which is assigned to the connection interface (IS) being assigned to the data sink, with the transimpedance converter circuit (S2; S2') being connected to the differential input of the TMDS receiver (RC),
- the transimpedance converter circuit (S2; S2'), in particular in case of at least one galvanic connection between the data source and the data sink, is suppliable by means of at least two terminating resistors (R_{T}, R_{T}') of the TMDS receiver (RC) with an operating voltage (AV_{CC}), for example in the order of about 3.3 volt, said operating voltage (AV_{CC}) in particular being able to supply up to about twelve milliampere per differential input, and/or
- an operating voltage is suppliable to the TMDS transmitter (TM), in particular to the output stage of the TMDS transmitter (TM), via the differential pair of wires (AD, AD').

8. The circuit arrangement according to at least one of claims 1 to 7, **characterized in that** the transimpedance converter circuit (S2) comprises
- at least one amplifier (TIA₁), the differential input of which is assigned to the light-absorbing element (PD₁), and
- at least one first coupling capacitor (C₂) being assigned to the first output of the amplifier (TIA₁), and at least one second coupling capacitor (C₃) being assigned to the second output of the amplifier (TIA₁), for charging the differential input of the TMDS receiver (RC) with the TMDS encoded signals being taken up from the light-absorbing element (PD₁) and being amplified by means of the amplifier (TIA₁).

9. The circuit arrangement according to claim 8, **characterized in**
- **that**, for at least partially terminating the differential pair of wires (AD, AD'), the transimpedance converter circuit (S2) comprises
-- at least one first resistor (R₁), in particular at least one first terminating resistor, and
-- at least one second resistor (R₂), in particular at least one second terminating resistor,
by means of which resistors (R₁, R₂) the operating point of the input stage of the TMDS receiver (RC) can be adjusted by means of generating a common mode voltage for the TMDS receiver (RC) from the operating voltage (AV_{CC}), and
- **that** the supply current (I_{supply}), feeding the supply voltage (V_{supply}), flows at least partially via the first resistor (R₁) and/or via the first resistor (R₂) from the differential pair of wires (AD, AD') to the amplifier (TIA₁).

10. The circuit arrangement according to at least one of claims 1 to 7, **characterized in that** the transimpedance converter circuit (S2') comprises
- at least one amplifier (TIA₁), the differential input of which is assigned to the light-absorbing element (PD₁), and
- at least one first switching transistor (T₃) being assigned to the first output of the amplifier (TIA₁), and at least one second switching transistor (T₄) being assigned to the second output of the amplifier (TIA₁), for charging the differential input of the TMDS receiver (RC) with the TMDS encoded signals being taken up from the light-absorbing element (PD₁) and being amplified by means of the amplifier (TIA₁), wherein the supply current (I_{supply}) of the amplifier (TIA₁), feeding the supply voltage (V_{supply}), is at least partially the current flowing through the switching transistors (T₃, T₄).

11. The circuit arrangement according claim 10, **characterized in that**, for at least partially terminating the differential pair of wires (AD, AD'), the transimpedance converter circuit (S2') comprises
- at least one first resistor (R₁), in particular at least one first terminating resistor, and
- at least one second resistor (R₂), in particular at least one second terminating resistor,
by means of which resistors (R₁, R₂) the operating point of the input stage of the TMDS receiver (RC) can be adjusted by means of generating a common mode voltage for the TMDS receiver (RC) from the operating voltage (AV_{CC}).

12. A method for transmitting signals from at least one data source to at least one data sink, said signals being TMDS encoded at least in part, in particular at least in a time slot manner, and in particular being assigned to at least one DVI data connection and/or to at least one HDMI data connection,
- wherein the driver circuit (S1; S1') is supplied by at least one connection interface (IQ), which is connected upstream and which is assigned to the data source, with a supply voltage (V_{DVI/HDMI}), for example in the order of about five volt, said supply voltage (V_{DVI/HDMI}) in particular being able to supply up to about 55 milliampere,
- wherein the electrical TMDS encoded signals are electro-optically converted by means of at least one light-emitting element (LD₁) connected downstream of the driver circuit (S1; S1'), in particular by means of at least one light diode, by means of at least one light-emitting diode, by means of at least one laser diode or by means of at least one laser, for example by means of at least one semiconductor laser, and are coupled into at least one optical fibre (F₁), in particular into at least one glass fibre or into at least one plastic material fibre, for example into at least one plastic fiber, as light (L_{TMDS}) being supplied with the TMDS encoded signals,
- wherein the direct current portion supplied from at least one TMDS transmitter (TM) to the connection interface (IQ), which is assigned to the data source, is converted by means of the driver circuit (S1; S1') to a modulated signal current for controlling the light-emitting element (LD₁),
- wherein the light (L_{TMDS}) being supplied with the TMDS encoded signals is coupled out from the optical fibre (F₁) by means of at least one light-absorbing element (PD₁), in particular by means of at least one photodiode, is opto-electrically converted and is supplied to at least one transimpedance converter circuit (S2; S2'), which is connected downstream of the light-absorbing element (PD₁) and upstream of at least one connection interface (IS) being assigned to the data sink, the transimpedance converter circuit (S2; S2') being supplied by a direct voltage portion being applied to at least one differential pair of wires (AD, AD').

13. The method according to claim 12, **characterized in that** electrical energy, in particular electrical power, for operating the transimpedance converter circuit (S2; S2') is taken from that electrical energy, in particular from that electrical power, which is the product of the direct current portion in the connection between the transimpedance converter circuit (S2; S2') and at least one TMDS receiver (RC), which is assigned to the connection interface (IS) being assigned to the data sink, and of the direct voltage portion at the TMDS receiver (RC).

14. The method according to claim 12 or 13, **characterized in that**, in particular in case of at least one galvanic connection between the data source and the data sink,
- the TMDS transmitter (TM) is terminated by means of at least one TMDS receiver (RC) of the connection interface (IS) being assigned to the data sink,
- an operating voltage is supplied to the TMDS transmitter (TM), in particular to the output stage of the TMDS transmitter (TM), via the differential pair of wires (AD, AD') between the data source and the data sink,
- the driver circuit (S1; S1') is supplied by the connection interface (IQ), which is assigned to the data source, with a supply voltage (V_{DVI/HDMI}), for example in the order of about five volt, said supply voltage (V_{DVI/HDMI}) in particular being able to supply up to about 55 milliampere,
- the transimpedance converter circuit (S2; S2') is supplied by means of at least two terminating resistors (R_{T}, R_{T}') of the TMDS receiver (RC) with an operating voltage (AV_{CC}), for example in the order of about 3.3 volt, said operating voltage (AV_{CC}) in particular being able to supply up to about twelve milliampere per differential input.

15. Use of at least one circuit arrangement (100; 100') according to at least one of claims 1 to 11 and/or of a method according to at least one of claims 12 to 14 for the signal connection, in particular in at least one cable connection, for example in at least one active optical transmission cable, between at least one HDTV data source, for example at least one Blu-ray player, and at least one HDTV data sink, for example at least one flat screen with very high resolution.

## Revendications

1. Dispositif de circuit (100; 100') pour transmettre des signaux codés TMDS, coordonnés notamment à au moins une liaison de données DVI et/ou au moins une liaison de données HDMI, au moins partiellement, notamment au moins par intervalles de temps depuis au moins une source de données vers au moins un collecteur de données,
- dans lequel le dispositif de circuit (100; 100') présente au moins un circuit d'excitation (S1; S1'),
-- qui est monté en aval d'au moins une interface de liaison (IQ) coordonnée à une source de données et peut être alimenté par cette interface de liaison (IQ) avec une tension d'alimentation (V_{DVI/HDMI}), chargeable notamment jusqu'à environ 55 milliampères, tension d'alimentation (V_{DVI/HDMI}) par exemple de l'ordre de grandeur d'environ cinq volts,
-- qui est monté en amont d'au moins un élément émetteur de lumière (LD₁), prévu pour convertir électro-optiquement des signaux codés TDMS électriques, notamment au moins une diode électroluminescente, au moins une diode émettrice de lumière, au moins une diode laser ou au moins un laser, par exemple au moins un laser à semi-conducteurs, au moyen duquel élément émetteur de lumière (LD₁) la lumière (L_{TMDS}) alimentée par les signaux codés TMDS peut être injectée dans au moins une fibre optique (F₁), notamment dans au moins une fibre de verre ou dans au moins une fibre de matière synthétique, par exemple dans au moins une fibre de plastique et
-- qui présente au moins un circuit d'augmentation de tension (DB₁), conçu notamment comme un doubleur de tension, et/ou fonctionnant comme convertisseur de tension continue, au moyen duquel de l'énergie électrique, notamment une puissance électrique résultant de,
--- une différence de potentiel ou une différence de tension (V_{LT1}) fournie notamment au moyen d'au moins un élément limiteur de tension (LT₁), par exemple au moyen d'au moins un régulateur transversal ou régulateur de dérivation, respectivement
--- une tension de terminaison (V_{Term}) fournie au moyen d'au moins un élément de régulation de tension ou un régulateur de tension (REG₁)
peut être extraite et/ou injectée.

2. Dispositif de circuit selon la revendication 1, **caractérisé en ce que** l'énergie électrique
- peut être extraite, **en ce que** le circuit d'augmentation de tension (DB₁) charge avec un courant circulant la différence de potentiel ou la différence de tension (V_{LT1}) resp. la tension de terminaison (V_{Term}), qui est notamment conçu de telle sorte qu'il tente de diminuer la différence de potentiel ou la différence de tension (V_{LT1}) resp. la tension de terminaison (V_{Term}) et/ou
- peut être injectée, **en ce que** le circuit d'augmentation de tension (DB₁) alimente avec un courant circulant une différence de potentiel ou une différence de tension plus haute déterminée pour mettre en fonctionnement l'élément émetteur de lumière (LD₁) entre le raccord de référence (Ref) du circuit d'augmentation de tension (DB₁) et le potentiel ou la tension (Vₒᵤₜ) du raccord de sortie du circuit d'augmentation de tension (DB₁), qui est notamment conçu de telle sorte qu'il tente d'augmenter la différence de potentiel ou la différence de tension plus haute.

3. Dispositif de circuit selon la revendication 1 ou 2, **caractérisé en ce que** le circuit d'excitation (S1 resp. S1') présente au moins un circuit amplificateur (DRV₁),notamment au moins un amplificateur d'entrée et au moins un transistor de commutation (T₁) pour moduler le courant circulant à travers l'élément émetteur de lumière (LD₁), notamment en fonction du signal de sortie différentiel d'au moins un émetteur TMDS (TM) de l'interface de liaison (IQ) coordonnée à la source de données,
- dans lequel la grille ou la base du transistor de commutation (T₁) est reliée avec le raccord de sortie du circuit d'amplificateur (DRV₁),
- dans lequel le drain ou le collecteur du transistor de commutation (T₁) est coordonné à la tension d'alimentation (V_{DVI/HDMI}), notamment se situe essentiellement à la tension d'alimentation (V_{DVI/HDMI}),
- dans lequel la source ou l'émetteur du transistor de commutation (T₁) est relié avec le raccord d'entrée de l'élément émetteur de lumière (LD₁).

4. Dispositif de circuit selon la revendication 3, **caractérisé en ce que** le circuit d'excitation (S1') présente au moins un deuxième transistor de commutation (T₂), conçu notamment comme un suiveur de source,
- dans lequel la grille ou la base du deuxième transistor de commutation (T₂) est coordonné à la tension d'alimentation (V_{DVI/HDMI}), notamment est réglable de manière à s'écarter au minimum de la tension d'alimentation (V_{DVI/HDMI}),
- dans lequel le drain ou le collecteur du deuxième transistor de commutation (T₂) est coordonné à la tension d'alimentation (V_{DVI/HDMI}), notamment se situe essentiellement à la tension d'alimentation (V_{DVI/HDMI}),
- dans lequel la source ou l'émetteur du deuxième transistor de commutation (T₂) est relié avec la source ou l'émetteur du premier transistor de commutation (T₁) et avec le raccord d'entrée de l'élément émetteur de lumière (LD₁).

5. Dispositif de circuit selon au moins l'une des revendications 1 à 4, **caractérisé en ce que** le circuit d'excitation (S1 resp. S1') pour terminer au moins partiellement la paire de conducteurs différentielle (AD, AD')
- présente au moins une première résistance de terminaison (R_{T1}) branchée entre le raccord de sortie de l'élément limiteur de tension (LT₁) resp. l'élément de régulation de tension ou le régulateur de tension (REG₁) et un premier raccord d'entrée du circuit amplificateur (DRV₁) ainsi que
- au moins une deuxième résistance de terminaison (R_{T2}) branchée entre le raccord d'entrée de l'élément limiteur de tension (LT₁) resp. l'élément de régulation de tension ou le régulateur de tension (REG₁) et un deuxième raccord d'entrée du circuit amplificateur (DRV₁),
résistances de terminaison (R_{T1}, R_{T2}) au moyen desquelles peut être fournie à l'émetteur TMDS (TM) pour régler le point de travail de son étage de sortie la différence de la différence de potentiel ou la différence de tension (V_{LT1}) et la tension d'alimentation (V_{DVI/HDMI}) resp. la tension de terminaison (V_{Term}).

6. Dispositif de circuit selon au moins l'une des revendications 1 à 5, **caractérisé en ce que** le dispositif de circuit (100; 100') présente au moins un circuit de conversion de transimpédance (S2; S2'),
- qui est monté en aval d'au moins un élément absorbant la lumière (PD₁) prévu pour convertir électro-optiquement la lumière (L_{TMDS}) alimentée par les signaux codés TDMS, au moyen duquel élément absorbant la lumière (PD₁) la lumière (L_{TMDS}) alimentée par les signaux codés TMDS peut être extraite de la fibre optique (F₁),
- qui est monté en amont d'au moins une interface de liaison (IS) coordonnée au collecteur de données et
- qui peut être alimenté par une composante de tension continue appliquée à au moins une paire de conducteurs différentielle (AD, AD').

7. Dispositif de circuit selon au moins l'une des revendications 1 à 6, **caractérisé en ce que**, notamment dans le cas d'au moins une liaison galvanique entre la source de données et le collecteur de données,
- l'émetteur TMDS (TM) peut être terminé au moyen d'au moins un récepteur TMDS (RC) coordonné à l'interface de liaison (IS) coordonnée au collecteur de données, et le circuit de conversion de transimpédance (S2; S2') est raccordé à l'entrée différentielle du récepteur TMDS (RC),
- le circuit de conversion de transimpédance (S2; S2'), notamment dans le cas d'au moins une liaison galvanique entre la source de données et le collecteur de données, peut fournir au moyen d'au moins deux résistances de terminaison (R_{T}, R_{T}') du récepteur TMDS (RC) une tension de fonctionnement (AV_{CC}), chargeable jusqu'à environ douze milliampères par entrée différentielle par exemple dans l'ordre de grandeur d'environ 3,3 volts et/ou
- une tension de fonctionnement peut être fournie à l'émetteur TMDS (TM), notamment à l'étage de sortie de l'émetteur TMDS (TM) via la paire de conducteurs différentielle (AD, AD').

8. Dispositif de circuit selon au moins l'une des revendications 1 à 7, **caractérisé en ce que** le circuit de conversion de transimpédance (S2)
- présente au moins un amplificateur (TIA₁), dont l'entrée différentielle est coordonnée à l'élément absorbant la lumière (PD₁) et
- au moins un premier condensateur de couplage (C₂) coordonné à la première sortie de l'amplificateur (TIA₁) ainsi qu'au moins un deuxième condensateur de couplage (C₃) coordonné à la deuxième sortie de l'amplificateur (TIA₁) pour alimenter l'entrée différentielle du récepteur TMDS (RC) avec les signaux codés TMDS reçus par l'élément absorbant la lumière (PD₁) et amplifiés au moyen de l'amplificateur (TIA₁).

9. Dispositif de circuit selon la revendication 8, **caractérisé en ce que**,
- le circuit de conversion de transimpédance (S2) présente pour terminer au moins partiellement la paire de conducteurs différentielle (AD, AD')
-- au moins une première résistance (R₁), notamment au moins une première résistance de terminaison ainsi que
-- au moins une deuxième résistance (R₂), notamment au moins une deuxième résistance de terminaison,
au moyen desquelles résistances (R₁, R₂) le point de travail de l'étage d'entrée du récepteur TMDS (RC) peut être réglé au moyen de la génération d'une tension de synchronisation continue pour le récepteur TMDS (RC) à partir de la tension de fonctionnement (AV_{CC}) et
- le courant d'alimentation (I_{supply}) alimentant la tension d'alimentation (V_{supply}) s'écoule au moins partiellement via la première résistance (R₁) et/ou la deuxième résistance (R₂) de la paire de conducteurs différentielle (AD, AD') vers l'amplificateur (TIA₁).

10. Dispositif de circuit selon au moins l'une des revendications 1 à 7, **caractérisé en ce que** le circuit de conversion de transimpédance (S2')
- présente au moins un amplificateur (TIA₁), dont l'entrée différentielle est coordonnée à l'élément absorbant la lumière (PD₁) et
- au moins un premier transistor de commutation (T₃) coordonné à la première sortie de l'amplificateur (TIA₁) ainsi qu'au moins un deuxième transistor de commutation (T₄) coordonné à la deuxième sortie de l'amplificateur (TIA₁) pour alimenter l'entrée différentielle du récepteur TMDS (RC) avec les signaux codés TMDS reçus par l'élément absorbant la lumière (PD₁) et amplifiés au moyen de l'amplificateur (TIA₁),
dans lequel le courant d'alimentation (I_{supply}) alimentant la tension d'alimentation (V_{supply}) de l'amplificateur (TIA₁) est le courant s'écoulant au moins partiellement à travers les transistors de commutation (T₃, T₄).

11. Dispositif de commutation selon la revendication 10, **caractérisé en ce que** le circuit de conversion de transimpédance (S2') pour terminer au moins partiellement la paire de conducteurs différentielle (AD, AD')
- présente au moins une première résistance (R₁), notamment au moins une première résistance de terminaison ainsi que
- au moins une deuxième résistance (R₂), notamment au moins une deuxième résistance de terminaison,
au moyen desquelles résistances (R₁, R₂) le point de travail de l'étage d'entrée du récepteur TMDS (RC) peut être réglé au moyen de la génération d'une tension de synchronisation continue pour le récepteur TMDS (RC) à partir de la tension de fonctionnement (AV_{CC}).

12. Procédé de transmission des signaux codés TMDS, coordonnés notamment à au moins d'une liaison de données DVI et/ou au moins une liaison de données HDMI, au moins partiellement, notamment au moins par intervalles de temps depuis au moins une source de données vers au moins un collecteur de données,
- dans lequel au moins un circuit d'excitation (S1; S1') d'au moins une interface de liaison (IQ) coordonnée à une source de données, monté en aval est alimenté avec une tension d'alimentation (V_{DVI/HDMI}), chargeable notamment jusqu'à environ 55 milliampères, tension d'alimentation (V_{DVI/HDMI}) par exemple de l'ordre de grandeur d'environ cinq volts,
- dans lequel les signaux codés TMDS électriques sont convertis opto-électriquement au moyen d'au moins un élément émetteur de lumière (LD1) monté en aval du circuit d'excitation (S1; S1'), notamment au moyen d'au moins une diode électroluminescente, au moins une diode émettrice de lumière, au moins une diode laser ou au moins un laser, par exemple au moins un laser à semi-conducteurs, et sont injectée comme lumière (L_{TMDS}) alimentée avec les signaux codés TMDS dans au moins une fibre optique (F₁), notamment dans au moins une fibre de verre ou dans au moins une fibre de matière synthétique, par exemple dans au moins une fibre de plastique,
- dans lequel la composante de courant continu fournie à partir d'au moins un émetteur TMDS (TM) de l'interface de liaison (IQ) coordonnée à la source de données est converti au moyen du circuit d'excitation (S1; S1') en un signal de courant modulé pour commander l'élément émetteur de lumière (LD1),
- dans lequel la lumière (L_{TMDS}) alimentée avec les signaux codés TMDS est extraite au moyen d'au moins un élément absorbant la lumière (PD₁), notamment au moyen d'au moins une photodiode, de la fibre optique (F₁), convertie électro-optiquement et injectée dans au moins un circuit de conversion de transimpédance (S2; S2'), monté en aval de l'élément absorbant la lumière (PD₁), monté en amont d'au moins une interface de liaison (IS) coordonnée au collecteur de données, dans lequel le circuit de conversion de transimpédance (S2; S2') est alimenté via une composante de tension continue appliquée à au moins une paire de conducteurs différentielle (AD, AD').

13. Procédé selon la revendication 12, **caractérisé en ce que** de l'énergie électrique, notamment de la puissance électrique est prélevée pour faire fonctionner le circuit de conversion de transimpédance (S2; S2') de ladite énergie électrique, notamment ladite puissance électrique, qui est obtenue comme produit de la composante de courant continu dans la liaison entre le circuit de conversion de transimpédance (S2; S2') et au moins un récepteur TMDS (RC) coordonné à l'interface de liaison (IS) coordonnée au collecteur de données et de la composante de tension continue du récepteur TMDS (RC).

14. Procédé selon la revendication 12 ou 13, **caractérisé en ce que**, notamment dans le cas d'au moins une liaison galvanique entre la source de données et le collecteur de données,
- l'émetteur TMDS (TM) est terminé au moyen d'au moins un récepteur TMDS (RC) de l'interface de liaison (IS) coordonnée au collecteur de données,
- une tension de fonctionnement est fournie à l'émetteur TMDS (TM), notamment à l'étage de sortie de l'émetteur TMDS (TM), via la paire de conducteurs différentielle (AD, AD') entre la source de données et le collecteur de données,
- le circuit d'excitation (S1; S1') est alimenté par l'interface de liaison (IQ) coordonnée à la source de données avec une tension d'alimentation (V_{DVI/HDMI}) chargeable notamment avec jusqu'à environ 55 milliampères, par exemple dans l'ordre de grandeur d'environ cinq volts,
- au circuit de conversion de transimpédance (S2; S2') est fournie au moyen d'au moins deux résistances de terminaison (R_{T}, R_{T}') du récepteur TMDS (RC) une tension d'alimentation (AV_{CC}) chargeable notamment avec environ jusqu'à douze milliampères par entrée différentielle par exemple dans l'ordre de grandeur d'environ 3,3 volts.

15. Utilisation d'au moins un dispositif de circuit (100; 100') selon au moins l'une des revendications 1 à 11 et/ou d'un procédé selon au moins l'une des revendications 12 à 14 dans la liaison de signal, notamment dans au moins une liaison câblée, par exemple dans au moins un câble de transmission optique actifs, entre au moins une source de données HDTV, par exemple au moins un lecteur Blu-Ray-Player et au moins un collecteur de données HDTV, par exemple au moins un écran plat à très haute résolution.
